(19) Europäisches Patentamt

European Patent Office

Office européen des brevets

(11) EP 1 093 284 A2

(12) **EUROPEAN PATENT APPLICATION**

(43) Date of publication:
18.04.2001 Bulletin 2001/16

(51) Int Cl.$^7$: **H04M 9/08**

(21) Application number: 00305515.9

(22) Date of filing: 30.06.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **01.07.1999 JP 18764399**

(71) Applicant: **MATSUSHITA ELECTRIC INDUSTRIAL CO., LTD.**
**Kadoma-shi, Osaka 571-8501 (JP)**

(72) Inventor: **Terada, Yasuhiro**
**Yokohama 240-0042 (JP)**

(74) Representative: **Senior, Alan Murray**
**J.A. KEMP & CO.,**
**14 South Square,**
**Gray's Inn**
**London WC1R 5LX (GB)**

(54) **Method and apparatus for cancelling echo**

(57) Coefficients of an adaptive filter are updated in response to a far-end signal and an error signal by using internal coefficients. The adaptive filter operates for generating a first pseudo echo signal in response to the far-end signal. A main filter operates for generating a second pseudo echo signal in response to the far-end signal. A decision is made as to whether or not the coefficients of the adaptive filter and the internal coefficients in the updating process should be initialized. In cases where it is decided that the coefficients of the adaptive filter and the internal coefficients in the updating process should be initialized, a tap length of the adaptive filter and the updating process is set to a non-original value smaller than an original value, and then initialization of the coefficients of the adaptive filter and the internal coefficients in the updating process is executed. The coefficients of the adaptive filter are transferred to the main filter when certain conditions are met. In cases where transfer of the coefficients of the adaptive filter to the main filter is executed after the tap length of the adaptive filter and the updating process is set to the non-original value, the tap length of the adaptive filter and the updating process is set to the original value, and then initialization of the coefficients of the adaptive filter and the internal coefficients in the updating process is executed.

FIG. 3

Printed by Jouve, 75001 PARIS (FR)

**Description**

This invention relates to a method and an apparatus for canceling echoes in speech communication systems. In addition, this invention relates to a recording medium storing a program for echo cancel.

In a typical system for speech communication between two opposite sides, each of the sides has a loudspeaker and a microphone. An echo is caused if sound generated by the loudspeaker enters the microphone and is picked up thereby.

It is known to equip a speech communication system with an acoustic echo canceler. Some conventional acoustic echo cancelers are formed by adaptive filters. The adaptive filters enable the echo cancelers to follow changes in conditions affecting the generation of echoes. The speeds at which the conventional echo cancelers follow changes in echo generating conditions tend to be low.

It is a first aim of this invention to provide an improved method of canceling an echo.

It is a second aim of this invention to provide an improved apparatus for canceling an echo.

It is a third aim of this invention to provide a recording medium storing an improved program for echo cancel.

A first aspect of this invention provides a method of canceling an echo. The method comprises the steps of updating coefficients of an adaptive filter in response to a far-end signal and an error signal by using internal coefficients, the adaptive filter and the internal coefficients having a tap length; providing the adaptive filter for generating a first pseudo echo signal in response to the far-end signal; providing a main filter for generating a second pseudo echo signal in response to the far-end signal; deciding whether or not the coefficients of the adaptive filter and the internal coefficients in the updating step should be initialized; in cases where it is decided that the coefficients of the adaptive filter and the internal coefficients in the updating step should be initialized, setting the tap length of the adaptive filter and the updating step to a non-original value smaller than an original value, and then executing initialization of the coefficients of the adaptive filter and the internal coefficients in the updating step; deciding whether or not the coefficients of the adaptive filter should be transferred to the main filter; in cases where it is decided that the coefficients of the adaptive filter should be transferred to the main filter, executing transfer of the coefficients of the adaptive filter to the main filter; and in cases where transfer of the coefficients of the adaptive filter to the main filter is executed after the tap length of the adaptive filter and the updating step is set to the non-original value, setting the tap length of the adaptive filter and the updating step to the original value, and then executing initialization of the coefficients of the adaptive filter and the internal coefficients in the updating step.

A second aspect of this invention is based on the first aspect thereof, and provides a method further comprising the steps of dividing the far-end signal into sub-band signals; dividing an echo signal into sub-band signals; generating second sub-band pseudo echo signals in response to the sub-band signals of the far-end signal for sub-bands respectively; generating sub-band error signals corresponding to differences between the sub-band signals of the echo signal and the second sub-band pseudo echo signals, respectively; and combining the sub-band error signals into a full-band error signal; wherein echo cancel is implemented for each of the sub-bands.

A third aspect of this invention is based on the first aspect thereof, and provides a method further comprising the step of in cases where transfer of the coefficients of the adaptive filter to the main filter remains unexecuted for a predetermined time after the tap length of the adaptive filter and the updating step is set to the non-original value, returning the tap length of the adaptive filter and the updating step to the original value.

A fourth aspect of this invention provides a method of initializing coefficients in an echo canceler. The method comprises the steps of calculating an ERLE (echo return loss enhancement) ratio in power between an echo signal and an error signal generated by a main filter for every sample; calculating a difference between the ERLE ratio for a current sample and the ERLE ratio for an immediately-preceding sample; and in cases where the calculated difference exceeds a predetermined threshold value, initializing coefficients of an adaptive filter and internal coefficients used in updating the coefficients of the adaptive filter.

A fifth aspect of this invention provides a method of initializing coefficients in an echo canceler. The method comprises the steps of calculating an ERLE (echo return loss enhancement) ratio in power between an echo signal and an error signal generated by a main filter for every sample; and in cases where the calculated ERLE ratio continues to drop for a plurality of successive samples, initializing coefficients of an adaptive filter and internal coefficients used in updating the coefficients of the adaptive filter.

A sixth aspect of this invention is based on the first aspect thereof, and provides a method wherein the step of executing initialization comprises calculating an ERLE (echo return loss enhancement) ratio in power between an echo signal and the second pseudo error signal for every sample; calculating a difference between the ERLE ratio for a current sample and the ERLE ratio for an immediately-preceding sample; and in cases where the calculated difference exceeds a predetermined threshold value, initializing the coefficients of the adaptive filter and the internal coefficients in the updating step.

A seventh aspect of this invention is based on the first aspect thereof, and provides a method wherein the step of executing initialization comprises calculating an ERLE (echo return loss enhancement) ratio in power between

# EP 1 093 284 A2

an echo signal and the second pseudo error signal for every sample; and in cases where the calculated ERLE ratio continues to drop for a plurality of successive samples, initializing the coefficients of the adaptive filter and the internal coefficients in the updating step.

An eighth aspect of this invention is based on the first aspect thereof, and provides a method wherein the updating step uses a coefficient updating algorithm of a least-squares-method type.

A ninth aspect of this invention provides an apparatus for canceling an echo. The apparatus comprises means for updating coefficients of an adaptive filter in response to a far-end signal and an error signal by using internal coefficients, the adaptive filter and the internal coefficients having a tap length; means for providing the adaptive filter which generates a first pseudo echo signal in response to the far-end signal; means for providing a main filter which generates a second pseudo echo signal in response to the far-end signal; means for deciding whether or not the coefficients of the adaptive filter and the internal coefficients in the updating means should be initialized; means for in cases where it is decided that the coefficients of the adaptive filter and the internal coefficients in the updating means should be initialized, setting the tap length of the adaptive filter and the updating means to a non-original value smaller than an original value, and then executing initialization of the coefficients of the adaptive filter and the internal coefficients in the updating means; means for deciding whether or not the coefficients of the adaptive filter should be transferred to the main filter; means for in cases where it is decided that the coefficients of the adaptive filter should be transferred to the main filter, executing transfer of the coefficients of the adaptive filter to the main filter; and means for in cases where transfer of the coefficients of the adaptive filter to the main filter is executed after the tap length of the adaptive filter and the updating means is set to the non-original value, setting the tap length of the adaptive filter and the updating means to the original value, and then executing initialization of the coefficients of the adaptive filter and the internal coefficients in the updating means.

A tenth aspect of this invention is based on the ninth aspect thereof, and provides an apparatus further comprising means for dividing the far-end signal into sub-band signals; means for dividing an echo signal into sub-band signals; means for generating second sub-band pseudo echo signals in response to the sub-band signals of the far-end signal for sub-bands respectively; means for generating sub-band error signals corresponding to differences between the sub-band signals of the echo signal and the second sub-band pseudo echo signals, respectively; and means for combining the sub-band error signals into a full-band error signal; wherein echo cancel is implemented for each of the sub-bands.

An eleventh aspect of this invention is based on the ninth aspect thereof, and provides an apparatus further comprising means for in cases where transfer of the coefficients of the adaptive filter to the main filter remains unexecuted for a predetermined time after the tap length of the adaptive filter and the updating means is set to the non-original value, returning the tap length of the adaptive filter and the updating means to the original value.

A twelfth aspect of this invention provides a device for initializing coefficients in an echo canceler. The device comprises means for calculating an ERLE (echo return loss enhancement) ratio in power between an echo signal and an error signal generated by a main filter for every sample; means for calculating a difference between the ERLE ratio for a current sample and the ERLE ratio for an immediately-preceding sample; and means for in cases where the calculated difference exceeds a predetermined threshold value, initializing coefficients of an adaptive filter and internal coefficients used in updating the coefficients of the adaptive filter.

A thirteenth aspect of this invention provides a device for initializing coefficients in an echo canceler. The device comprises means for calculating an ERLE (echo return loss enhancement) ratio in power between an echo signal and an error signal generated by a main filter for every sample; and means for in cases where the calculated ERLE ratio continues to drop for a plurality of successive samples, initializing coefficients of an adaptive filter and internal coefficients used in updating the coefficients of the adaptive filter.

A fourteenth aspect of this invention is based on the ninth aspect thereof, and provides an apparatus wherein the means for executing initialization comprises means for calculating an ERLE (echo return loss enhancement) ratio in power between an echo signal and the second pseudo error signal for every sample; means for calculating a difference between the ERLE ratio for a current sample and the ERLE ratio for an immediately-preceding sample; and means for in cases where the calculated difference exceeds a predetermined threshold value, initializing the coefficients of the adaptive filter and the internal coefficients in the updating means.

A fifteenth aspect of this invention is based on the ninth aspect thereof, and provides an apparatus wherein the means for executing initialization comprises means for calculating an ERLE (echo return loss enhancement) ratio in power between an echo signal and the second pseudo error signal for every sample; and means for in cases where the calculated ERLE ratio continues to drop for a plurality of successive samples, initializing the coefficients of the adaptive filter and the internal coefficients in the updating means.

A sixteenth aspect of this invention is based on the ninth aspect thereof, and provides an apparatus wherein the updating means uses a coefficient updating algorithm of a least-squares-method type.

A seventeenth aspect of this invention provides a recording medium storing a program for the method in one of the first to eighth aspects of this invention.

3

The invention will be described further below with reference to exemplary embodiments and the accompanying drawings, in which:-

Fig. 1 is a diagram of a prior-art echo canceler.

Fig. 2 is a block diagram of an echo canceler according to a first embodiment of this invention.

Fig. 3 is an operation flow diagram of the echo canceler in Fig. 2.

Fig. 4 is a flowchart of a segment of a control program for a DSP in Fig. 2.

Fig. 5 is a block diagram of an echo canceler according to a second embodiment of this invention.

Fig. 6 is an operation flow diagram of the echo canceler in Fig. 5.

Fig. 7 is a flowchart of a segment of a control program for a DSP in Fig. 5.

Fig. 8 is a flowchart of a block in Fig. 7.

Fig. 9 is a block diagram of an echo canceler according to a third embodiment of this invention.

Fig. 10 is an operation flow diagram of the echo canceler in Fig. 9.

Fig. 11 is a flowchart of a segment of a control program for a DSP in Fig. 9.

Fig. 12 is a block diagram of an echo canceler according to a fourth embodiment of this invention.

Fig. 13 is an operation flow diagram of the echo canceler in Fig. 12.

Fig. 14 is a flowchart of a segment of a control program for a DSP in Fig. 12.

Fig. 15 is a block diagram of an echo canceler according to a fifth embodiment of this invention.

Fig. 16 is an operation flow diagram of the echo canceler in Fig. 15.

Fig. 17 is a flowchart of a segment of a control program for a DSP in Fig. 15.

A prior-art echo canceler will be explained hereinafter for a better understanding of this invention.

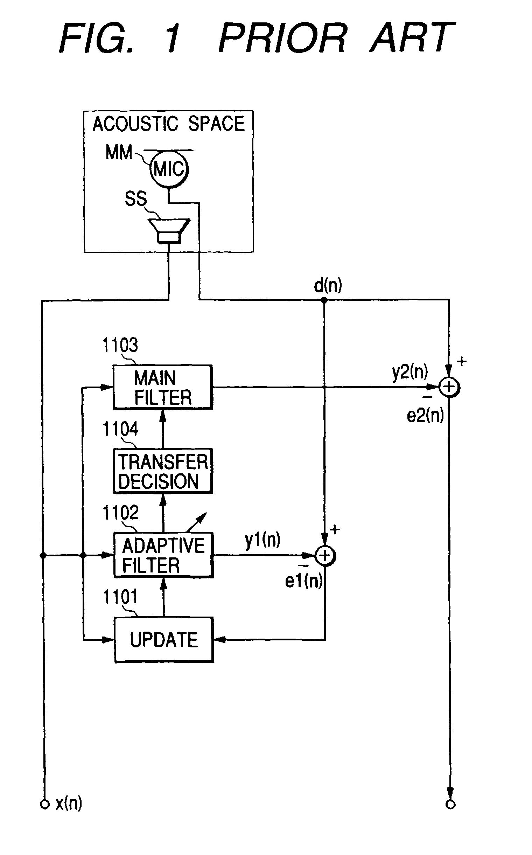

Fig. 1 shows a prior-art echo canceler in a speech communication system. The speech communication system connects a near-end side and a far-end side. The near-end side has a loudspeaker SS and a microphone MM located in an acoustic space. The loudspeaker SS receives a far-end signal $x(n)$. The loudspeaker SS converts the far-end signal $x(n)$ into corresponding sound. The microphone MM generates a near-end signal. The generated near-end signal contains an echo signal $d(n)$ when a portion of the sound generated by the loudspeaker SS travels to the microphone MM along an echo path and is picked up thereby. The prior-art echo canceler in Fig. 1 is of a foreground/background type (an FG/BG type).

The prior-art echo canceler in Fig. 1 includes an updating section 1101, an adaptive filter 1102, a main filter 1103, and a deciding section 1104. The adaptive filter 1102 forms a background filter whose operation characteristics are determined by coefficients (tap coefficients). The section 1101 updates the coefficients in the adaptive filter 1102 in response to an error signal $e1(n)$ and the far-end signal $x(n)$. The updating section 1101 and the adaptive filter 1102 cooperate to identify or estimate the echo path, and to generate a first pseudo echo signal $y1(n)$ in response to the far-end signal $x(n)$ and the error signal $e1(n)$. The error signal $e1(n)$ is the difference between the echo signal $d(n)$ and the first pseudo echo signal $y1(n)$.

The main filter 1103 forms a foreground filter whose operation characteristics are determined by coefficients (tap coefficients). The main filter 1103 generates a second pseudo echo signal $y2(n)$ in response to the far-end signal $x(n)$. The second pseudo echo signal $y2(n)$ is designed to cancel the echo signal $d(n)$ which would return to the far-end side. The section 1104 decides whether or not predetermined conditions are met. The predetermined conditions are that the error signal $e1(n)$ is smaller than the echo signal $d(n)$ by a certain level or more, and the error signal $e1(n)$ is smaller than an error signal $e2(n)$ which is the difference between the echo signal $d(n)$ and the second pseudo echo signal $y2(n)$. In the case where the section 1104 decides that the predetermined conditions are met, the section 1104 transfers the coefficients from the adaptive filter 1102 to the main filter 1103. Thus, in this case, the main filter 1103 generates the second pseudo echo signal $y2(n)$ depending on the newly-transferred coefficients. The error signal $e2(n)$ which is the difference between the echo signal $d(n)$ and the second pseudo echo signal $y2(n)$ is transmitted to the far-end side. On the other hand, in the case where the section 1104 decides that the predetermined conditions are not met, the section 1104 does not execute the transfer of the coefficients from the adaptive filter 1102 to the main filter 1103.

When at least one of the microphone MM and the loudspeaker SS is moved so that the echo path is changed, a process of repetitively updating the coefficients in the adaptive filter 1102 is automatically started. In the case where an FRLS algorithm is used in the repetitively updating process, the convergence of the coefficients in the adaptive filter 1102 on acceptable values require repeating a coefficient-updating step a given number of times which is equal to the tap length (the echo cancel time) multiplied by 3. For example, in the case where the sampling frequency is 16 kHz and the tap length corresponds to 4,000 taps so that the echo cancel time is 250 ms, it takes 750 ms to provide the convergence of the coefficients on acceptable values.

First Embodiment

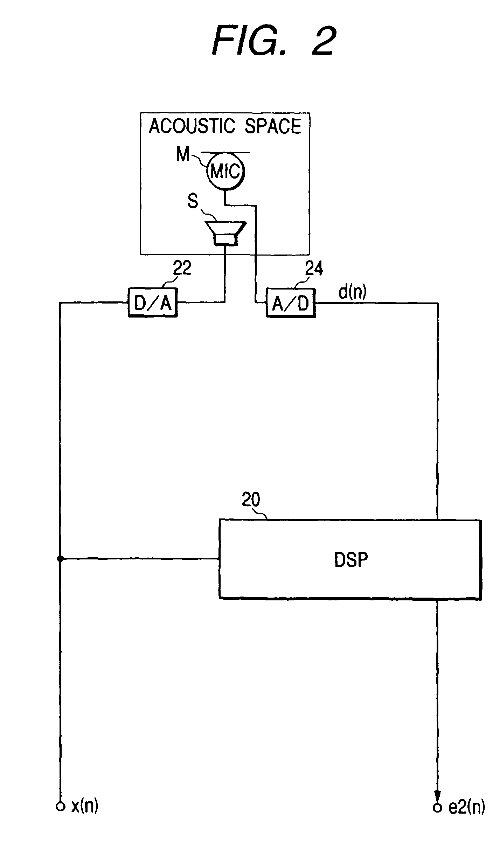

Fig. 2 shows an echo canceler in a speech communication system according to a first embodiment of this invention. The speech communication system connects a near-end side and a far-end side. The near-end side has a loudspeaker S and a microphone M located in an acoustic space. A digital far-end signal x(n) having a sequence of samples is transmitted to a digital signal processor (DSP) 20 and a digital-to-analog (D/A) converter 22. Here, "n" denotes the present sample. The D/A converter 22 changes the digital far-end signal x(n) into a corresponding analog signal. The D/A converter 22 outputs the analog signal to the loudspeaker S. The loudspeaker S converts the output signal of the D/A converter 22 into corresponding sound. The microphone M generates an analog near-end signal. The analog near-end signal contains an echo signal when a portion of the sound generated by the loudspeaker S travels to the microphone M along an echo path and is picked up thereby. The microphone M outputs the analog near-end signal to an analog-to-digital (A/D) converter 24. The A/D converter 24 changes the analog near-end signal into a corresponding digital signal. The A/D converter 24 outputs the digital signal to the DSP 20. The output signal of the A/D converter 24 contains a digital echo signal d(n) when a portion of the sound generated by the loudspeaker S travels to the microphone M and is picked up thereby. The digital echo signal d(n) has a sequence of samples.

The DSP 20 includes a combination of an input/output port, a processing section, a ROM, and a RAM. The DSP 20 operates in accordance with a control program stored in the ROM. According to the control program, the DSP 20 forms the echo canceler which removes echo components from the output signal of the A/D converter 24. The DSP 20 generates a digital echo-free signal as a digital error signal e2(n). The DSP 20 outputs the digital error signal e2(n) which is transmitted to the far-end side.

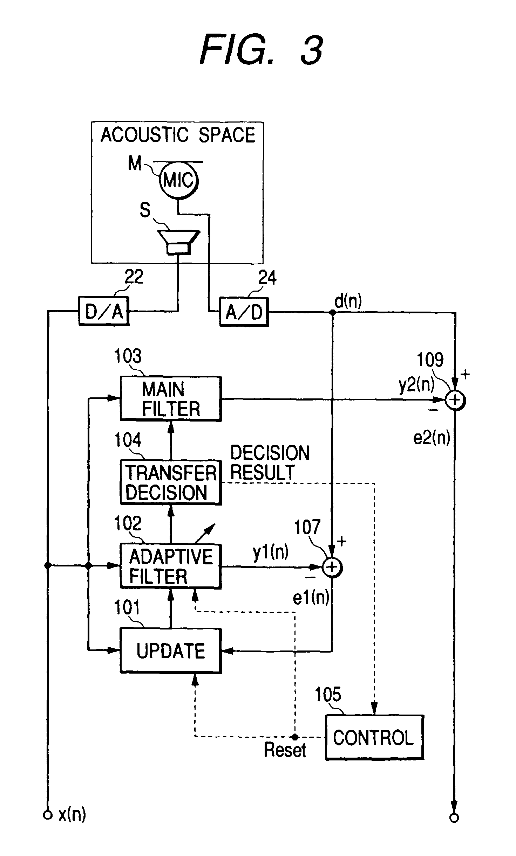

Fig. 3 shows the flow of operation of the DSP 20 rather than the details of the hardware of the DSP 20. With reference to Fig. 3, the DSP 20 is programmed to form an updating section 101, a digital adaptive filter 102, a digital main filter 103, a deciding section 104, a control section 105, and subtracters 107 and 109.

The adaptive filter 102 forms a background filter whose operation characteristics are determined by coefficients (tap coefficients). The updating section 101 updates the coefficients in the adaptive filter 102 in response to an error signal e1(n) and the far-end signal x(n) according to a predetermined algorithm such as an NLMS algorithm, an FRLS algorithm, or another least-squares-method based algorithm. The updating section 101 has internal coefficients (internal tap coefficients) which are bases for generating the coefficients in the adaptive filter 102. The updating section 101 and the adaptive filter 102 cooperate to identify or estimate the echo path, and to generate a first pseudo echo signal y1 (n) in response to the far-end signal x(n) and the error signal e1(n). The subtracter 107 generates the error signal e1(n) which is the difference between the echo signal d(n) and the first pseudo echo signal y1(n).

The main filter 103 forms a foreground filter whose operation characteristics are determined by coefficients (tap coefficients). The main filter 103 generates a second pseudo echo signal y2(n) in response to the far-end signal x(n). The second pseudo echo signal y2(n) is designed to cancel the echo signal d(n) which would return to the far-end side. The deciding section 104 periodically decides whether or not the coefficients should be transferred from the adaptive filter 102 to the main filter 103, specifically whether or not predetermined conditions are met. The period of the decision by the deciding section 104 corresponds to one sample of the far-end signal x(n). The period of the decision by the deciding section 104 may be equal to another predetermined value. The predetermined conditions used by the deciding section 104 relate to at least one of the ratio between the error signal e1(n) and the error signal e2(n), the difference between the error signal e1(n) and the error signal e2(n), and the value of the correlation between the first pseudo echo signal y1(n) and the echo signal d(n). A typical example of the predetermined conditions is that the error signal e1(n) is smaller than the echo signal d(n) by a certain level or more, and the error signal e1(n) is smaller than the error signal e2(n). In the case where the deciding section 104 decides that the predetermined conditions are met, the deciding section 104 transfers the coefficients from the adaptive filter 102 to the main filter 103. Thus, in this case, the main filter 103 generates the second pseudo echo signal y2(n) depending on the newly-transferred coefficients. The subtracter 109 generates the error signal e2(n) which is the difference between the echo signal d(n) and the second pseudo echo signal y2(n). The error signal e2(n) is transmitted to the far-end side as an echo-free signal. On the other hand, in the case where the deciding section 104 decides that the predetermined conditions are not met, the deciding section 104 does not execute the transfer of the coefficients from the adaptive filter 102 to the main filter 103. The deciding section 104 informs the control section 105 of the decision result.

The control section 105 decides whether or not the internal coefficients (internal tap coefficients) in the updating section 101 and the coefficients in the adaptive filter 102 should be initialized. When the result of the decision is positive, the control section 105 changes the tap length (the total number of taps) of the updating section 101 and the adaptive filter 102 from an original value M0 to a predetermined value M1, and initializes the internal coefficients in the updating section 101 and the coefficients in the adaptive filter 102. The predetermined value M1 is smaller than the original value M0. The predetermined value M1 is also referred to as the smaller value M 1. The smaller value M1 is chosen so that direct sound and initial reflected sound can be deadened. When the result of the decision is negative, the control section 105 does not execute the initialization. In the case where the current tap length is equal to the smaller value M1 and the control section 105 is informed that the result of the decision by the deciding section 104 is positive, the control section 105 returns the tap length of the updating section 101 and the adaptive filter 102 to the original value M0, and initializes the internal coefficients in the updating section 101 and the coefficients in the adaptive filter 102.

A first example of the decision by the control section 105 is as follows. The control section 105 calculates the ERLE (echo return loss enhancement) ratio in power between the echo signal d(n) and the error signal e2(n). The control section 105 calculates the difference D(n) between the value of the current sample of the ERLE ratio and the value of the immediately-preceding sample of the ERLE ratio. The control section 105 compares the difference D(n) with a predetermined threshold value. When the difference D(n) exceeds the threshold value, the control section 105 decides that the internal coefficients in the updating section 101 and the coefficients in the adaptive filter 102 should be initialized. Otherwise, the control section 105 decides that the internal coefficients in the updating section 101 and the coefficients in the adaptive filter 102 should not be initialized.

A second example of the decision by the control section 105 is as follows. The control section 105 calculates the ERLE (echo return loss enhancement) ratio in power between the echo signal d(n) and the error signal e2(n). The control section 105 judges whether or not the ERLE ratio continues to drop for a predetermined number of successive samples. In the case where the ERLE ratio continues to drop for the predetermined number of successive samples, the control section 105 decides that the internal coefficients in the updating section 101 and the coefficients in the adaptive filter 102 should be initialized. Otherwise, the control section 105 decides that the internal coefficients in the updating section 101 and the coefficients in the adaptive filter 102 should not be initialized.

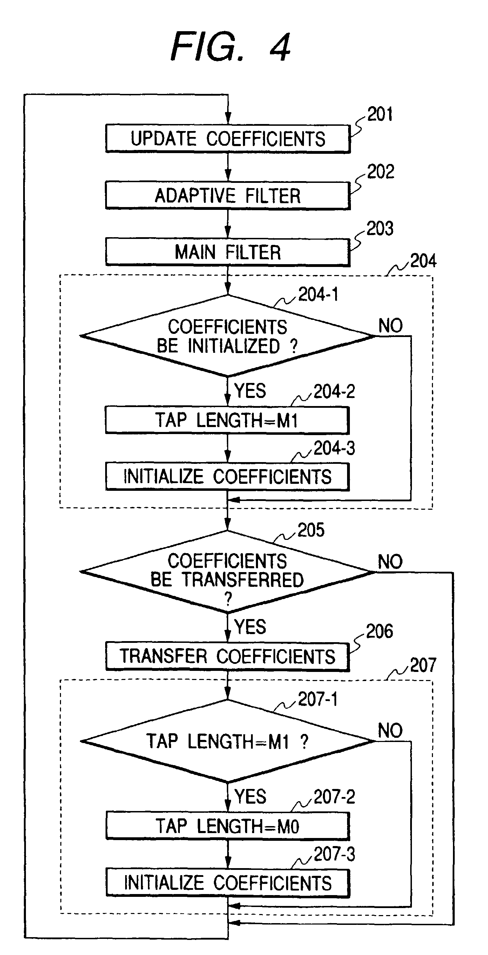

Fig. 4 is a flowchart of a segment of the control program for the DSP 20. In general, the program segment is executed for every sample of each of the far-end signal x(n) and the echo signal d(n). As shown in Fig. 4, a first step 201 of the program segment updates the coefficients (tap coefficients) in the adaptive filter in response to the error signal e1(n) and the far-end signal x(n) according to a predetermined algorithm such as an NLMS algorithm, an FRLS algorithm, or another least-squares-method based algorithm. The step 201 uses internal coefficients (internal tap coefficients) as bases for generating the coefficients in the adaptive filter.

A step 202 following the step 201 executes an adaptive filtering process based on the coefficients updated by the step 201, and thereby generates the first pseudo echo signal y1(n) in response to the far-end signal x(n) and the error signal e1(n). In addition, the step 202 generates the error signal e1(n) which is the difference between the echo signal d(n) and the first pseudo echo signal y1(n).

A step 203 subsequent to the step 202 executes a main filtering process based on coefficients (tap coefficients), and thereby generates the second pseudo echo signal y2(n) in response to the far-end signal x(n). In addition, the step 203 generates the error signal e2(n) which is the difference between the echo signal d(n) and the second pseudo echo signal y2(n). The step 203 outputs the error signal e2(n) toward the far-end side as an echo-free signal.

A first coefficient control block 204 includes steps 204-1, 204-2, and 204-3. The step 204-1 follows the step 203. The step 204-1 decides whether or not the internal coefficients used by the coefficient updating step 201 and the coefficients used by the adaptive filtering step 202 should be initialized. When the result of the decision is positive, the program advances from the step 204-1 to the step 204-2. When the result of the decision is negative, the program advances from the step 204-1 to a step 205.

In the first coefficient control block 204, the step 204-2 changes the tap length (the total number of taps) used in the coefficient updating step 201 and the adaptive filtering step 202 from the original value M0 to the smaller value M1. The smaller value M1 is chosen so that direct sound and initial reflected sound can be deadened.

In the first coefficient control block 204, the step 204-3 follows the step 204-2. The step 204-3 initializes the internal coefficients used by the coefficient updating step 201 and the coefficients used by the adaptive filtering step 202. After the step 204-3, the program advances to the step 205.

A first example of the decision by the step 204-1 is as follows. The step 204-1 calculates the ERLE (echo return loss enhancement) ratio in power between the echo signal d(n) and the error signal e2(n). The step 204-1 calculates the difference D(n) between the value of the current sample of the ERLE ratio and the value of the immediately-preceding sample of the ERLE ratio. The step 204-1 compares the difference D(n) with the predetermined threshold value. When the difference D(n) exceeds the threshold value, the step 204-1 decides that the internal coefficients used by the coefficient updating step 201 and the coefficients used by the adaptive filtering step 202 should be initialized. Otherwise, the step 204-1 decides that the internal coefficients used by the coefficient updating step 201 and the coefficients used by the adaptive filtering step 202 should not be initialized.

A second example of the decision by the step 204-1 is as follows. The step 204-1 calculates the ERLE (echo return loss enhancement) ratio in power between the echo signal d(n) and the error signal e2(n). The step 204-1 judges whether or not the ERLE ratio continues to drop for a predetermined number of successive samples. In the case where the ERLE ratio continues to drop for the predetermined number of successive samples, the step 204-1 decides that the internal coefficients used by the coefficient updating step 201 and the coefficients used by the adaptive filtering step 202 should be initialized. Otherwise, the step 204-1 decides that the internal coefficients used by the coefficient updating step 201 and the coefficients used by the adaptive filtering step 202 should not be initialized.

The step 205 periodically decides whether or not the coefficients should be transferred from the adaptive filtering step 202 to the main filtering step 203, specifically whether or not the predetermined conditions are met. The period of the decision by the step 205 corresponds to one sample of the far-end signal x(n). The period of the decision by the step 205 may be equal to another predetermined value. The predetermined conditions used by the step 205 relate to at least one of the ratio between the error signal e1(n) and the error signal e2(n), the difference between the error signal e1(n) and the error signal e2(n), and the value of the correlation between the first pseudo echo signal y1(n) and the echo signal d(n). A typical example of the predetermined conditions is that the error signal e1(n) is smaller than the echo signal d(n) by a certain level or more, and the error signal e1(n) is smaller than the error signal e2(n). When the step 205 decides that the predetermined conditions are met, the program advances from the step 205 to a step 206. Otherwise, the program returns from the step 205 to the step 201.

The step 206 transfers the coefficients from the adaptive filtering step 202 to the main filtering step 203. Thus, in this case, the main filtering step 203 generates the second pseudo echo signal y2(n) depending on the newly-transferred coefficients during the next execution cycle of the program segment.

A second coefficient control block 207 includes steps 207-1, 207-2, and 207-3. The step 207-1 follows the step 206. The step 207-1 checks whether or not the current tap length used in the coefficient updating step 201 and the adaptive filtering step 202 is equal to the smaller value M1. When the current tap length is equal to the smaller value M 1, the program advances from the step 207-1 to the step 207-2. Otherwise, the program returns from the step 207-1 to the step 201.

In the second coefficient control block 207, the step 207-2 returns the tap length (used in the coefficient updating step 201 and the adaptive filtering step 202) to the original value M0. The step 207-3 follows the step 207-2. The step 207-3 initializes the internal coefficients used by the coefficient updating step 201 and the coefficients used by the adaptive filtering step 202. After the step 207-3, the program returns to the step 201.

As previously mentioned, the tap length can be changed between the original value M0 and the smaller value M1. According to this design, the echo canceler can quickly follow changes in echo generating conditions.

Second Embodiment

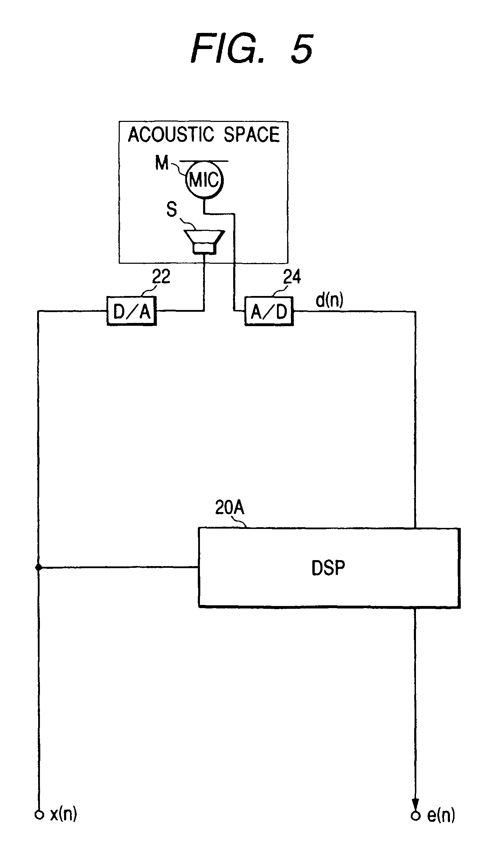

Fig. 5 shows a second embodiment of this invention which is similar to the first embodiment thereof except for design changes mentioned hereinafter. The second embodiment of this invention includes a DSP 20A instead of the DSP 20 (see Fig. 2).

The DSP 20A includes a combination of an input/output port, a processing section, a ROM, and a RAM. The DSP 20A operates in accordance with a control program stored in the ROM. According to the control program, the DSP 20A forms an echo canceler which responds to a digital far-end signal x(n) and removes echo components from the output signal of an A/D converter 24. The DSP 20A generates a digital echo-free signal as a digital error signal e(n). The digital far-end signal x(n) has a sequence of samples. Also, the digital error signal e(n) has a sequence of samples. Here, "n" denotes the present sample. The DSP 20A outputs the digital error signal e(n) which is transmitted to the far-end side.

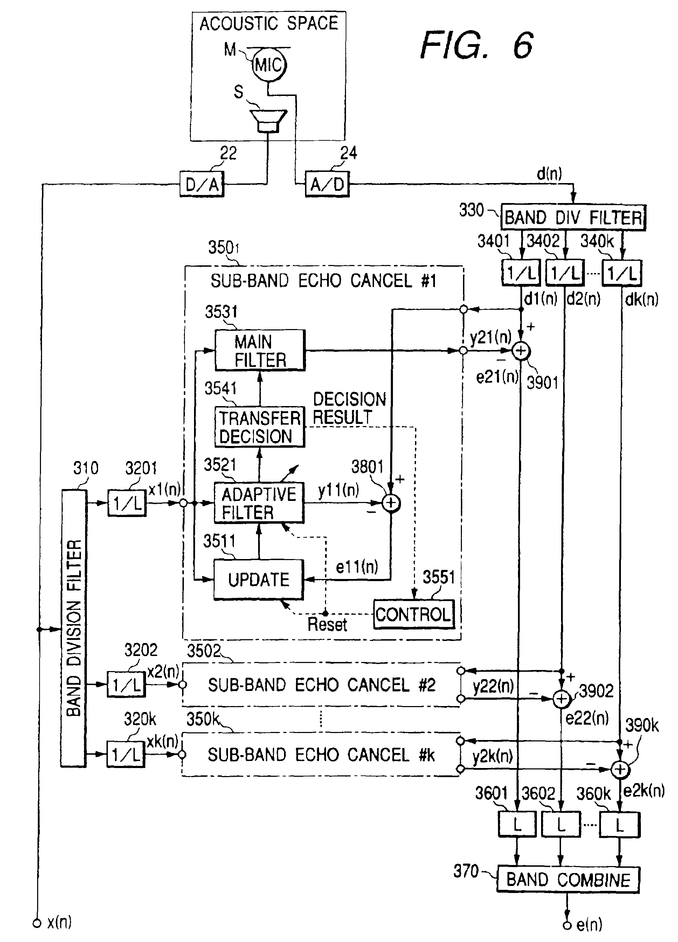

Fig. 6 shows the flow of operation of the DSP 20A rather than the details of the hardware of the DSP 20A. With reference to Fig. 6, the DSP 20A is programmed to form a band dividing filter 310, thinning sections 3201, 3202, ⋯, and 320k, a band dividing filter 330, thinning sections 3401, 3402, ⋯, and 340k, sub-band echo canceling blocks 3501, 3502, ⋯, and 350k, interpolating sections 3601, 3602, ⋯, and 360k, a band combining filter 370, and subtracters 3901, 3902, ⋯, and 390k. Here, "k" denotes a predetermined natural number equal to 2 or greater.

The sub-band echo canceling blocks 3501, 3502, ⋯, and 350k are similar in structure to each other. Only the structure of the sub-band echo canceling block 3501 will be explained in detail. The sub-and echo canceling block 3501 includes an updating section 3511, a digital adaptive filter 3521, a digital main filter 3531, a deciding section 3541, a control section 3551, and a subtracter 3801.

The band dividing filter 310 divides the frequency band of the far-end signal x(n) into "k" sub-bands. The band dividing filter 310 feeds the resultant sub-band signals to the thinning sections 3201, 3202, ⋯, and 320k, respectively. The band dividing filter 310 includes, for example, a polyphase filter. The thinning sections 3201, 3202, ⋯, and 320k thin or decimate the sub-band signals at a rate of 1 /L, and thereby generate thinning-resultant sub-band far-end signals x1(n), x2(n), ⋯, and xk(n), respectively. The thinning-resultant sub-band far-end signals x1(n), x2(n), ⋯, and xk(n) are fed to the sub-band echo canceling blocks 3501, 3502, ⋯, and 350k, respectively.

The band dividing filter 330 divides the frequency band of an echo signal d(n) into "k" sub-bands. The band dividing filter 330 feeds the resultant sub-band signals to the thinning sections 3401, 3402, ⋯, and 340k, respectively. The band dividing filter 330 includes, for example, a polyphase filter. The thinning sections 3401, 3402, ⋯, and 340k thin or decimate the sub-band signals at a rate of 1/L, and thereby generate thinning-resultant sub-band echo signals d1(n), d2(n), ⋯, and dk(n), respectively. The thinning-resultant sub-band echo signals d1(n), d2(n), ⋯, and dk(n) are fed to the sub-band echo canceling blocks 3501, 3502, ⋯, and 350k, respectively.

The sub-band echo canceling blocks 3501, 3502, ⋯, and 350k are similar in operation to each other. Only the operation of the sub-band echo canceling block 3501 will be explained in detail.

In the sub-band echo canceling block 3501, the adaptive filter 3521 forms a background filter whose operation characteristics are determined by coefficients (tap coefficients). The updating section 3511 updates the coefficients in the adaptive filter 3521 in response to a sub-band error signal e11(n) and the sub-band far-end signal x1(n) according to a predetermined algorithm such as an NLMS algorithm, an FRLS algorithm, or another least-squares-method based algorithm. The updating section 3511 has internal coefficients (internal tap coefficients) which are bases for generating the coefficients in the adaptive filter 3521. The updating section 3511 and the adaptive filter 3521 cooperate to identify or estimate an echo path, and to generate a first sub-band pseudo echo signal y11(n) in response to the sub-band far-end signal x1(n) and the sub-band error signal e11(n). The subtracter 3801 generates the sub-band error signal e11(n) which is the difference between the sub-band echo signal d1(n) and the first sub-band pseudo echo signal y11(n).

In the sub-band echo canceling block 3501, the main filter 3531 forms a foreground filter whose operation characteristics are determined by coefficients (tap coefficients). The main filter 3531 generates a second sub-band pseudo echo signal y21(n) in response to the sub-band far-end signal x1(n). The second sub-band pseudo echo signal y2(n) is designed to cancel the sub-band echo signal d1(n) which would return to the far-end side. The deciding section 3541 periodically decides whether or not the coefficients should be transferred from the adaptive filter 3521 to the main filter 3531, specifically whether or not predetermined conditions are met. The period of the decision by the deciding section 3541 corresponds to one sample of the sub-band far-end signal x1(n). The period of the decision by the deciding section 3541 may be equal to another predetermined value. The predetermined conditions used by the deciding section 3541 relate to at least one of the ratio between the sub-band error signal e11(n) and a sub-band error signal e21(n), the difference between the sub-band error signal e11(n) and the sub-band error signal e21(n), and the value of the correlation between the first sub-band pseudo echo signal y11(n) and the sub-band echo signal d1(n). A typical example of the predetermined conditions is that the sub-band error signal e11(n) is smaller than the sub-band echo signal d1(n) by a certain level or more, and the sub-band error signal e11(n) is smaller than the sub-band error signal e21(n). In the case where the deciding section 3541 decides that the predetermined conditions are met, the deciding section 3541 transfers the coefficients from the adaptive filter 3521 to the main filter 3531. Thus, in this case, the main filter 3531 generates the second sub-band pseudo echo signal y21(n) depending on the newly-transferred coefficients. The subtracter 3901 generates the sub-band error signal e21(n) which is the difference between the sub-band echo signal d1(n) and the second sub-band pseudo echo signal y21(n). The sub-band error signal e21(n) is transmitted to the interpolating section 3601. On the other hand, in the case where the deciding section 3541 decides that the predetermined conditions are not met, the deciding section 3541 does not execute the transfer of the coefficients from the adaptive filter 3521 to the main filter 3531. The deciding section 3541 informs the control section 3551 of the decision result.

In the sub-band echo canceling block 3501, the control section 3551 decides whether or not the internal coefficients (internal tap coefficients) in the updating section 3511 and the coefficients in the adaptive filter 3521 should be initialized. When the result of the decision is positive, the control section 3551 changes the tap length (the total number of taps) of the updating section 3511 and the adaptive filter 3521 from an original value M0 to a predetermined value M1, and initializes the internal coefficients in the updating section 3511 and the coefficients in the adaptive filter 3521. The predetermined value M1 is smaller than the original value M0. The smaller value M1 is chosen so that direct sound and initial reflected sound can be deadened. When the result of the decision is negative, the control section 3551 does not execute the initialization. In the case where the current tap length is equal to the smaller value M1 and the control section 3551 is informed that the result of the decision by the deciding section 3541 is positive, the control section 3551 returns the tap length of the updating section 3511 and the adaptive filter 3521 to the original value M0, and initializes the internal coefficients in the updating section 3511 and the coefficients in the adaptive filter 3521.

A first example of the decision by the control section 3551 is as follows. The control section 3551 calculates the sub-band ERLE (echo return loss enhancement) ratio in power between the sub-band echo signal d1(n) and the sub-band error signal e21(n). The control section 3551 calculates the sub-band difference D1(n) between the value of the current sample of the sub-band ERLE ratio and the value of the immediately-preceding sample of the sub-band ERLE ratio. The control section 3551 compares the sub-band difference D1(n) with a predetermined sub-band threshold value. When the sub-band difference D1(n) exceeds the sub-band threshold value, the control section 3551 decides that the internal coefficients in the updating section 3511 and the coefficients in the adaptive filter 3521 should be initialized. Otherwise, the control section 3551 decides that the internal coefficients in the updating section 3511 and the coefficients in the adaptive filter 102 should not be initialized.

A second example of the decision by the control section 3551 is as follows. The control section 3551 calculates the sub-band ERLE (echo return loss enhancement) ratio in power between the sub-band echo signal d1(n) and the sub-band error signal e21(n). The control section 3551 judges whether or not the sub-band ERLE ratio continues to drop for a predetermined number of successive samples. In the case where the sub-band ERLE ratio continues to drop for the predetermined number of successive samples, the control section 3551 decides that the internal coefficients in the updating section 3511 and the coefficients in the adaptive filter 102 should be initialized. Otherwise, the control section 3551 decides that the internal coefficients in the updating section 3511 and the coefficients in the adaptive filter 102 should not be initialized.

The sub-band echo canceling blocks 3502, ···, and 350k are similar in operation to the sub-band echo canceling block 3501. The sub-band echo canceling blocks 3502, ···, and 350k generate second sub-band pseudo echo signals y22(n), ···, and y2k(n) in response to the sub-band far-end signals x2(n), ···, and xk(n) and the sub-band echo signals d2(n), ···, and dk(n), respectively. The subtracters 3902, ···, and 390k generate sub-band error signals e22(n), ···, and e2k(n) which are the differences between the sub-band echo signals d2(n), ···, and dk(n) and the second sub-band pseudo echo signals y22(n), ···, and y2k(n), respectively. The sub-band error signals e22(n), ···, and e2k(n) are transmitted to the interpolating sections 3602, ···, and 360k, respectively.

The interpolating sections 3601, 3602, ···, and 360k execute interpolations with respect to the sub-band error signals e21(n), e22(n), ···, and e2k(n), respectively. The interpolations have a factor of L. The interpolating sections 3601, 3602, ···, and 360k feed the interpolation-resultant sub-band error signals to the band combining filter 370. The band combining filter 370 combines the interpolation-resultant sub-band error signals into the full-band error signal, that is, the digital error signal e(n) by a suitable addition process. The digital error signal e(n) is transmitted to the far-end side.

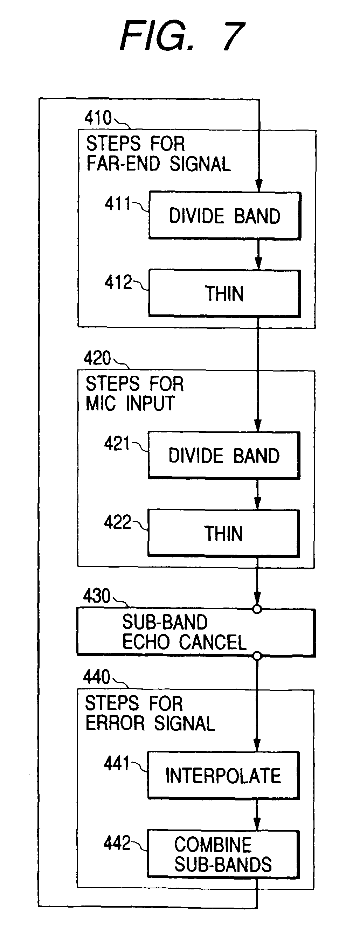

Fig. 7 is a flowchart of a segment of the control program for the DSP 20A. In general, the program segment is executed for every sample of each of the far-end signal x(n) and the echo signal d(n). As shown in Fig. 7, a first block 410 of the program segment includes steps 411 and 412. The step 411 divides the frequency band of the far-end signal x(n) into the "k" sub-bands through, for example, a polyphase filtering process.

In the block 410, the step 412 follows the step 411. The step 412 thins or decimates the sub-band signals at a rate of 1/L, and thereby generates the thinning-resultant sub-band far-end signals x1(n), x2(n), ···, and xk(n), respectively.

A block 420 includes steps 421 and 422. The step 421 follows the step 412. The step 421 divides the frequency band of the echo signal d(n) into the "k" sub-bands through, for example, a polyphase filtering process.

In the block 420, the step 422 follows the step 421. The step 422 thins or decimates the sub-band signals at a rate of 1/L, and thereby generates the thinning-resultant sub-band echo signals d1(n), d2(n), ···, and dk(n), respectively.

A block 430 subsequent to the step 422 generates the sub-band error signals e21(n), e22(n), ···, and e2k(n) in response to the sub-band far-end signals x1(n), x2(n), ···, and xk(n) and the sub-band echo signals d1(n), d2(n), ···, and dk(n), respectively.

A block 440 includes steps 441 and 442. The step 441 follows the block 430. The step 441 executes interpolations with respect to the sub-band error signals e21(n), e22(n), ···, and e2k(n), respectively. The interpolations have a factor of L.

In the block 440, the step 442 follows the step 441. The step 442 combines the interpolation-resultant sub-band error signals into the full-band error signal, that is, the digital error signal e(n) by a suitable addition process. The step 442 outputs the digital error signal e(n) toward the far-end side as an echo-free signal. After the step 442, the program returns to the step 411.

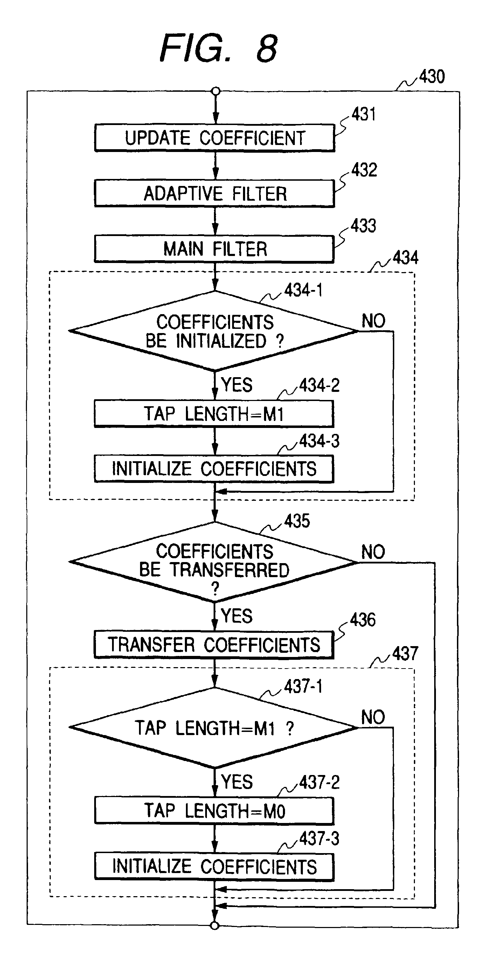

The block 430 has step sequences assigned to the "k" sub-bands respectively. The step sequences are similar to each other. Fig. 8 shows the details of one "j" of the step sequences in the block 430.

With reference to Fig. 8, a step 431 updates the coefficients (tap coefficients) in the adaptive filter in response to the sub-band error signal e1j(n) and the sub-band far-end signal xj(n) according to a predetermined algorithm such as an NLMS algorithm, an FRLS algorithm, or another least-squares-method based algorithm. The step 431 uses internal coefficients (internal tap coefficients) as bases for generating the coefficients in the adaptive filter.

A step 432 following the step 431 executes an adaptive filtering process based on the coefficients updated by the step 431, and thereby generates the first sub-band pseudo echo signal y1j(n) in response to the sub-band far-end signal xj(n) and the sub-band error signal e1j(n). In addition, the step 432 generates the sub-band error signal e1j(n) which is the difference between the sub-band echo signal dj(n) and the first sub-band pseudo echo signal y1 j(n).

A step 433 subsequent to the step 432 executes a main filtering process based on coefficients (tap coefficients), and thereby generates the second sub-band pseudo echo signal y2j(n) in response to the sub-band far-end signal xj(n). In addition, the step 433 generates the sub-band error signal e2j(n) which is the difference between the sub-band echo signal dj(n) and the second sub-band pseudo echo signal y2j(n).

A first coefficient control block 434 includes steps 434-1, 434-2, and 434-3. The step 434-1 follows the step 433. The step 434-1 decides whether or not the internal coefficients used by the coefficient updating step 431 and the coefficients used by the adaptive filtering step 432 should be initialized. When the result of the decision is positive, the program advances from the step 434-1 to the step 434-2. When the result of the decision is negative, the program advances from the step 434-1 to a step 435.

In the first coefficient control block 434, the step 434-2 changes the tap length (the total number of taps) used in the coefficient updating step 431 and the adaptive filtering step 432 from the original value M0 to the smaller value M1. The smaller value M1 is chosen so that direct sound and initial reflected sound can be deadened.

In the first coefficient control block 434, the step 434-3 follows the step 434-2. The step 434-3 initializes the internal coefficients used by the coefficient updating step 431 and the coefficients used by the adaptive filtering step 432. After the step 434-3, the program advances to the step 435.

A first example of the decision by the step 434-1 is as follows. The step 434-1 calculates the sub-band ERLE (echo return loss enhancement) ratio in power between the sub-band echo signal dj(n) and the sub-band error signal e2j(n). The step 434-1 calculates the sub-band difference Dj(n) between the value of the current sample of the sub-band ERLE ratio and the value of the immediately-preceding sample of the sub-band ERLE ratio. The step 434-1 compares the sub-band difference Dj(n) with the predetermined threshold value. When the sub-band difference Dj(n) exceeds the threshold value, the step 434-1 decides that the internal coefficients used by the coefficient updating step 431 and the coefficients used by the adaptive filtering step 432 should be initialized. Otherwise, the step 434-1 decides that the internal coefficients used by the coefficient updating step 431 and the coefficients used by the adaptive filtering step 432 should not be initialized.

A second example of the decision by the step 434-1 is as follows. The step 434-1 calculates the sub-band ERLE (echo return loss enhancement) ratio in power between the sub-band echo signal dj(n) and the sub-band error signal e2j(n). The step 434-1 judges whether or not the sub-band ERLE ratio continues to drop for a predetermined number of successive samples. In the case where the sub-band ERLE ratio continues to drop for the predetermined number of successive samples, the step 434-1 decides that the internal coefficients used by the coefficient updating step 431 and the coefficients used by the adaptive filtering step 432 should be initialized. Otherwise, the step 434-1 decides that the internal coefficients used by the coefficient updating step 431 and the coefficients used by the adaptive filtering step 432 should not be initialized.

The step 435 periodically decides whether or not the coefficients should be transferred from the adaptive filtering step 432 to the main filtering step 433, specifically whether or not the predetermined conditions are met. The period of the decision by the step 435 corresponds to one sample of the far-end signal x(n). The period of the decision by the step 435 may be equal to another predetermined value. The predetermined conditions used by the step 435 relate to at least one of the ratio between the sub-band error signal e1j(n) and the sub-band error signal e2j(n), the difference between the sub-band error signal e1j(n) and the sub-band error signal e2j(n), and the value of the correlation between the first sub-band pseudo echo signal y1j(n) and the sub-band echo signal dj(n). A typical example of the predetermined conditions is that the sub-band error signal e1j(n) is smaller than the sub-band echo signal dj(n) by a certain level or more, and the sub-band error signal e1j(n) is smaller than the sub-band error signal e2j(n). When the step 435 decides that the predetermined conditions are met, the program advances from the step 435 to a step 436. Otherwise, the program advances from the step 435 before exiting from the present step sequence.

The step 436 transfers the coefficients from the adaptive filtering step 432 to the main filtering step 433. Thus, in this case, the main filtering step 433 generates the second sub-band pseudo echo signal y2j(n) depending on the newly-transferred coefficients.

A second coefficient control block 437 includes steps 437-1, 437-2, and 437-3. The step 437-1 follows the step 436. The step 437-1 checks whether or not the current tap length used in the coefficient updating step 431 and the adaptive filtering step 432 is equal to the smaller value M1. When the current tap length is equal to the smaller value M1, the program advances from the step 437-1 to the step 437-2. Otherwise, the program advances from the step 437-1 before exiting from the present step sequence.

In the second coefficient control block 437, the step 437-2 returns the tap length (used in the coefficient updating step 431 and the adaptive filtering step 432) to the original value M0. The step 437-3 follows the step 437-2. The step 437-3 initializes the internal coefficients used by the coefficient updating step 431 and the coefficients used by the adaptive filtering step 432. After the step 437-3, the program exits from the present step sequence.

As previously mentioned, the tap length can be changed between the original value M0 and the smaller value MI. According to this design, the echo canceler can quickly follow changes in echo generating conditions.

As previously mentioned, the frequency band of each of the far-end signal x(n) and the echo signal d(n) is divided into the sub-bands. The echo canceling process is implemented sub-band by sub-band. This design makes it possible for the echo canceler to quickly follow changes in echo generating conditions.

Third Embodiment

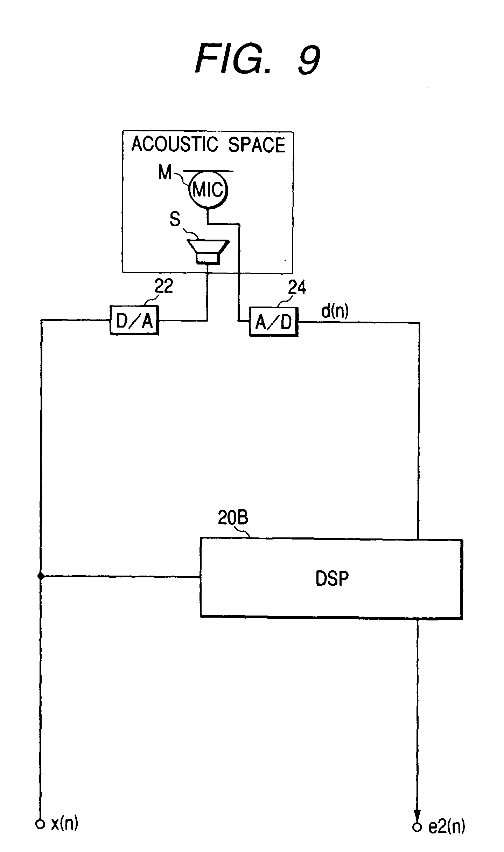

Fig. 9 shows a third embodiment of this invention which is similar to the first embodiment thereof except for design changes mentioned hereinafter. The third embodiment of this invention includes a DSP 20B instead of the DSP 20 (see Fig. 2).

The DSP 20B includes a combination of an input/output port, a processing section, a ROM, and a RAM. The DSP 20B operates in accordance with a control program stored in the ROM. According to the control program, the DSP 20B forms an echo canceler which responds to a digital far-end signal x(n) and removes echo components from the output signal of an A/D converter 24. The DSP 20B generates a digital echo-free signal as a digital error signal e2(n). The digital far-end signal x(n) has a sequence of samples. Also, the digital error signal e2(n) has a sequence of samples. Here, "n" denotes the present sample. The DSP 20B outputs the digital error signal e2(n) which is transmitted to the far-end side.

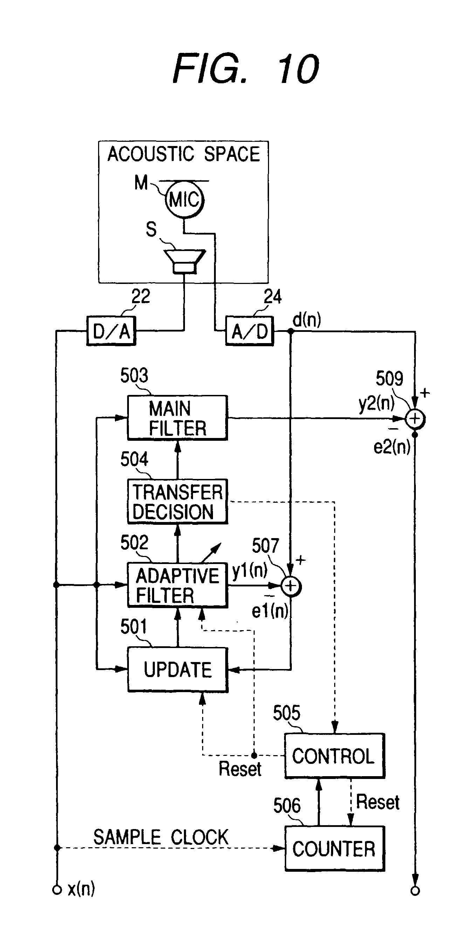

Fig. 10 shows the flow of operation of the DSP 20B rather than the details of the hardware of the DSP 20B. With reference to Fig. 10, the DSP 20B is programmed to form an updating section 501, a digital adaptive filter 502, a digital main filter 503, a deciding section 504, a control section 505, a counter 506, and subtracters 507 and 509.

The adaptive filter 502 forms a background filter whose operation characteristics are determined by coefficients (tap coefficients). The updating section 501 updates the coefficients in the adaptive filter 502 in response to an error signal e1(n) and the far-end signal x(n) according to a predetermined algorithm such as an NLMS algorithm, an FRLS algorithm, or another least-squares-method based algorithm. The updating section 501 has internal coefficients (internal tap coefficients) which are bases for generating the coefficients in the adaptive filter 502. The updating section 501 and the adaptive filter 502 cooperate to identify or estimate an echo path, and to generate a first pseudo echo signal y1 (n) in response to the far-end signal x(n) and the error signal e1(n). The subtracter 507 generates the error signal e1(n) which is the difference between a digital echo signal d(n) and the first pseudo echo signal y1(n). The digital echo signal d(n) has a sequence of samples.

The main filter 503 forms a foreground filter whose operation characteristics are determined by coefficients (tap coefficients). The main filter 503 generates a second pseudo echo signal y2(n) in response to the far-end signal x(n). The second pseudo echo signal y2(n) is designed to cancel the echo signal d(n) which would return to the far-end side. The deciding section 504 periodically decides whether or not the coefficients should be transferred from the adaptive filter 502 to the main filter 503, specifically whether or not predetermined conditions are met. The period of the decision by the deciding section 504 corresponds to one sample of the far-end signal x(n). The period of the decision by the deciding section 504 may be equal to another predetermined value. The predetermined conditions used by the deciding section 504 relate to at least one of the ratio between the error signal e1(n) and the error signal e2(n), the difference between the error signal e1(n) and the error signal e2(n), and the value of the correlation between the first pseudo echo signal y1(n) and the echo signal d(n). A typical example of the predetermined conditions is that the error signal e1(n) is smaller than the echo signal d(n) by a certain level or more, and the error signal e1(n) is smaller than the error signal e2(n). In the case where the deciding section 504 decides that the predetermined conditions are met, the deciding section 504 transfers the coefficients from the adaptive filter 502 to the main filter 503. Thus, in this case, the main filter 503 generates the second pseudo echo signal y2(n) depending on the newly-transferred coefficients. The subtracter 509 generates the error signal e2(n) which is the difference between the echo signal d(n) and the second pseudo echo signal y2(n). The error signal e2(n) is transmitted to the far-end side as an echo-free signal. On the other hand, in the case where the deciding section 504 decides that the predetermined conditions are not met, the deciding section 504 does not execute the transfer of the coefficients from the adaptive filter 502 to the main filter 503. The deciding section 504 informs the control section 505 of the decision result.

The control section 505 decides whether or not the internal coefficients (internal tap coefficients) in the updating section 501 and the coefficients in the adaptive filter 502 should be initialized. When the result of the decision is positive, the control section 505 changes the tap length (the total number of taps) of the updating section 501 and the adaptive filter 502 from an original value M0 to a predetermined value M1, and initializes the internal coefficients in the updating section 501 and the coefficients in the adaptive filter 502. In addition, the control section 505 feeds a reset signal to the counter 506. The predetermined value M1 is smaller than the original value M0. The smaller value M1 is chosen so that direct sound and initial reflected sound can be deadened. When the result of the decision is negative, the control section 505 does not execute the initialization.

A first example of the decision by the control section 505 is as follows. The control section 505 calculates the ERLE (echo return loss enhancement) ratio in power between the echo signal d(n) and the error signal e2(n). The control section 505 calculates the difference D(n) between the value of the current sample of the ERLE ratio and the value of the immediately-preceding sample of the ERLE ratio. The control section 505 compares the difference D(n) with a predetermined threshold value. When the difference D(n) exceeds the threshold value, the control section 505 decides that the internal coefficients in the updating section 501 and the coefficients in the adaptive filter 502 should be initialized. Otherwise, the control section 505 decides that the internal coefficients in the updating section 501 and the coefficients in the adaptive filter 502 should not be initialized.

A second example of the decision by the control section 505 is as follows. The control section 505 calculates the ERLE (echo return loss enhancement) ratio in power between the echo signal d(n) and the error signal e2(n). The control section 505 judges whether or not the ERLE ratio continues to drop for a predetermined number of successive samples. In the case where the ERLE ratio continues to drop for the predetermined number of successive samples, the control section 505 decides that the internal coefficients in the updating section 501 and the coefficients in the adaptive filter 502 should be initialized. Otherwise, the control section 505 decides that the internal coefficients in the updating section 501 and the coefficients in the adaptive filter 502 should not be initialized.

The counter 506 counts samples of the far-end signal x(n). The counter 506 feeds a signal representative of the number of counted samples to the control section 505. The counted-sample number is reset when the counter 506 receives the reset signal from the control section 505.

In the case where the current tap length is equal to the smaller value M1 and the control section 505 is informed that the result of the decision by the deciding section 504 is positive, the control section 505 returns the tap length of the updating section 501 and the adaptive filter 502 to the original value M0, and initializes the internal coefficients in the updating section 501 and the coefficients in the adaptive filter 502.

In the case where the counted-sample number represented by the signal fed from the counter 506 exceeds a predetermined threshold number but the control section 505 is not informed that the result of the decision by the deciding section 504 is positive, that is, in the case where the coefficients with the smaller tap length M1 are not transferred from the adaptive filter 502 to the main filter 503 in a given time, the control section 505 returns the tap length of the updating section 501 and the adaptive filter 502 to the original value M0, and initializes the internal coefficients in the updating section 501 and the coefficients in the adaptive filter 502. When the FRLS algorithm is used by the updating section 501, the threshold number is set equal to the smaller value M1 multiplied by 3.

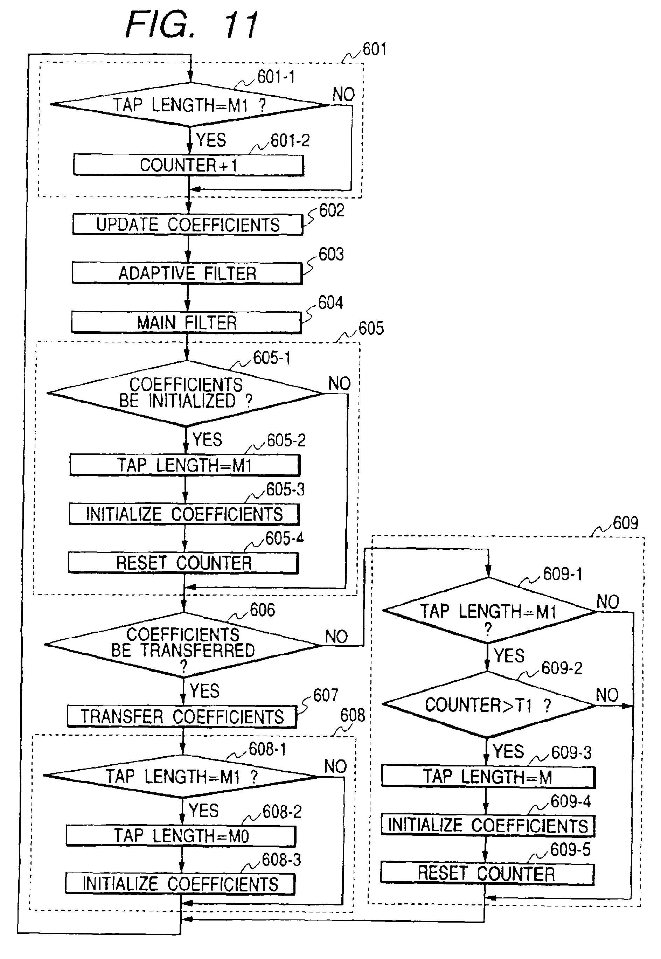

Fig. 11 is a flowchart of a segment of the control program for the DSP 20B. In general, the program segment is executed for every sample of each of the far-end signal x(n) and the echo signal d(n). As shown in Fig. 11, a first block 601 of the program segment includes steps 601-1 and 601-2. The step 601-1 decides whether or not the current tap length is equal to the smaller value M1. When the current tap length is equal to the smaller value M1, the program advances from the step 601-1 to the step 601-2. Otherwise, the program advances from the step 601-1 to a step 602.

The step 601-2 increments the counted-sample number by "1". After the step 601-2, the program advances to the step 602.

The step 602 updates the coefficients (tap coefficients) in the adaptive filter in response to the error signal e1 (n) and the far-end signal x(n) according to a predetermined algorithm such as an NLMS algorithm, an FRLS algorithm, or another least-squares-method based algorithm. The step 602 uses internal coefficients (internal tap coefficients) as bases for generating the coefficients in the adaptive filter.

A step 603 following the step 602 executes an adaptive filtering process based on the coefficients updated by the step 602, and thereby generates the first pseudo echo signal y1(n) in response to the far-end signal x(n) and the error signal e1(n). In addition, the step 603 generates the error signal e1(n) which is the difference between the echo signal d(n) and the first pseudo echo signal y1(n).

A step 604 subsequent to the step 603 executes a main filtering process based on coefficients (tap coefficients), and thereby generates the second pseudo echo signal y2(n) in response to the far-end signal x(n). In addition, the step 604 generates the error signal e2(n) which is the difference between the echo signal d(n) and the second pseudo echo signal y2(n). The step 604 outputs the error signal e2(n) toward the far-end side as an echo-free signal.

A first coefficient control block 605 includes steps 605-1, 605-2, 605-3, and 605-4. The step 605-1 follows the step 604. The step 605-1 decides whether or not the internal coefficients used by the coefficient updating step 602 and the coefficients used by the adaptive filtering step 603 should be initialized. When the result of the decision is positive, the program advances from the step 605-1 to the step 605-2. When the result of the decision is negative, the program advances from the step 605-1 to a step 606.

In the first coefficient control block 605, the step 605-2 changes the tap length (the total number of taps) used in the coefficient updating step 602 and the adaptive filtering step 603 from the original value M0 to the smaller value M1. The smaller value M1 is chosen so that direct sound and initial reflected sound can be deadened.

In the first coefficient control block 605, the step 605-3 follows the step 605-2. The step 605-3 initializes the internal coefficients used by the coefficient updating step 602 and the coefficients used by the adaptive filtering step 603. The step 605-4 follows the step 605-3. The step 605-4 resets the counted-sample number to "0". After the step 605-4, the program advances to the step 606.

A first example of the decision by the step 605-1 is as follows. The step 605-1 calculates the ERLE (echo return loss enhancement) ratio in power between the echo signal d(n) and the error signal e2(n). The step 605-1 calculates the difference D(n) between the value of the current sample of the ERLE ratio and the value of the immediately-preceding sample of the ERLE ratio. The step 605-1 compares the difference D(n) with the predetermined threshold value. When the difference D(n) exceeds the threshold value, the step 605-1 decides that the internal coefficients used by the coefficient updating step 602 and the coefficients used by the adaptive filtering step 603 should be initialized. Otherwise, the step 605-1 decides that the internal coefficients used by the coefficient updating step 602 and the coefficients used by the adaptive filtering step 603 should not be initialized.

A second example of the decision by the step 605-1 is as follows. The step 605-1 calculates the ERLE (echo return loss enhancement) ratio in power between the echo signal d(n) and the error signal e2(n). The step 605-1 judges whether or not the ERLE ratio continues to drop for a predetermined number of successive samples. In the case where the ERLE ratio continues to drop for the predetermined number of successive samples, the step 605-1 decides that the internal coefficients used by the coefficient updating step 602 and the coefficients used by the adaptive filtering step 603 should be initialized. Otherwise, the step 605-1 decides that the internal coefficients used by the coefficient updating step 602 and the coefficients used by the adaptive filtering step 603 should not be initialized.

The step 606 periodically decides whether or not the coefficients should be transferred from the adaptive filtering step 603 to the main filtering step 604, specifically whether or not the predetermined conditions are met. The period of the decision by the step 606 corresponds to one sample of the far-end signal x(n). The period of the decision by the step 606 may be equal to another predetermined value. The predetermined conditions used by the step 606 relate to at least one of the ratio between the error signal e1(n) and the error signal e2(n), the difference between the error signal e1(n) and the error signal e2(n), and the value of the correlation between the first pseudo echo signal y1(n) and the echo signal d(n). A typical example of the predetermined conditions is that the error signal e1(n) is smaller than the echo signal d(n) by a certain level or more, and the error signal e1(n) is smaller than the error signal e2(n). When the step 606 decides that the predetermined conditions are met, the program advances from the step 606 to a step 607. Otherwise, the program advances from the step 606 to a third coefficient control block 609.

The step 607 transfers the coefficients from the adaptive filtering step 603 to the main filtering step 604. Thus, in this case, the main filtering step 604 generates the second pseudo echo signal y2(n) depending on the newly-transferred coefficients during the next execution cycle of the program segment.

A second coefficient control block 608 includes steps 608-1, 608-2, and 608-3. The step 608-1 follows the step 607. The step 608-1 checks whether or not the current tap length used in the coefficient updating step 602 and the adaptive filtering step 603 is equal to the smaller value M1. When the current tap length is equal to the smaller value M1, the program advances from the step 608-1 to the step 608-2. Otherwise, the program returns from the step 608-1 to the step 601-1 in the block 601.

In the second coefficient control block 608, the step 608-2 returns the tap length (used in the coefficient updating step 602 and the adaptive filtering step 603) to the original value M0. The step 608-3 follows the step 608-2. The step 608-3 initializes the internal coefficients used by the coefficient updating step 602 and the coefficients used by the adaptive filtering step 603. After the step 608-3, the program returns to the step 601-1 in the block 601.

The third coefficient control block 609 includes steps 609-1, 609-2, 609-3, 609-4, and 609-5. The step 609-1 follows the step 606. The step 609-1 checks whether or not the current tap length used in the coefficient updating step 602 and the adaptive filtering step 603 is equal to the smaller value M1. When the current tap length is equal to the smaller value M1, the program advances from the step 609-1 to the step 609-2. Otherwise, the program returns from the step 609-1 to the step 601-1 in the block 601.

In the third coefficient control block 609, the step 609-2 decides whether or not the counted-sample number exceeds a predetermined threshold number T1. When the counted-sample number exceeds the threshold number T1, the program advances from the step 609-2 to the step 609-3. Otherwise, the program returns from the step 609-2 to the step 601-1 in the block 601.

In the third coefficient control block 609, the step 609-3 returns the tap length (used in the coefficient updating step 602 and the adaptive filtering step 603) to the original value M0. The step 609-4 follows the step 609-3. The step 609-4 initializes the internal coefficients used by the coefficient updating step 602 and the coefficients used by the adaptive filtering step 603. The step 609-5 follows the step 609-4. The step 609-5 resets the counted-sample number to "0". After the step 609-5, the program returns to the step 601-1 in the block 601.

As previously mentioned, the tap length can be changed between the original value M0 and the smaller value M1. According to this design, the echo canceler can quickly follow changes in echo generating conditions.

Fourth Embodiment

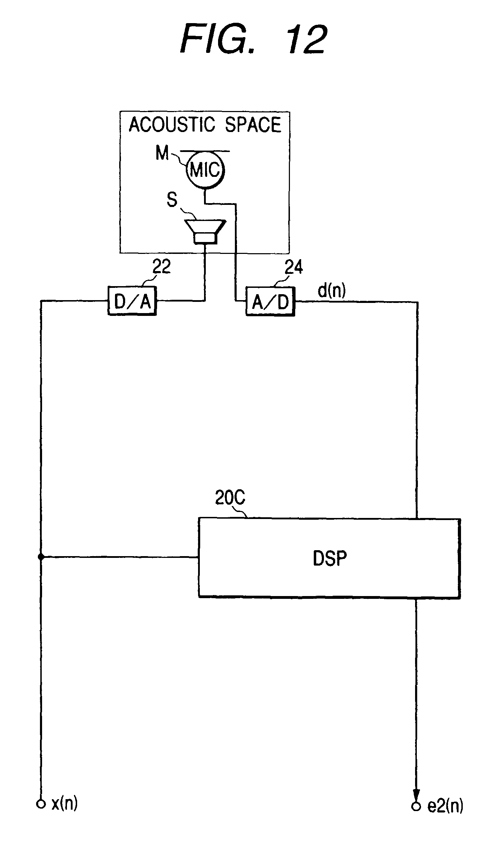

Fig. 12 shows a fourth embodiment of this invention which is similar to the first embodiment thereof except for design changes mentioned hereinafter. The fourth embodiment of this invention includes a DSP 20C instead of the DSP 20 (see Fig. 2).

The DSP 20C includes a combination of an input/output port, a processing section, a ROM, and a RAM. The DSP 20C operates in accordance with a control program stored in the ROM. According to the control program, the DSP 20C forms an echo canceler which responds to a digital far-end signal x(n) and removes echo components from the output signal of an A/D converter 24. The DSP 20C generates a digital echo-free signal as a digital error signal e2(n). The digital far-end signal x(n) has a sequence of samples. Also, the digital error signal e2(n) has a sequence of samples. Here, "n" denotes the present sample. The DSP 20C outputs the digital error signal e2(n) which is transmitted to the far-end side.

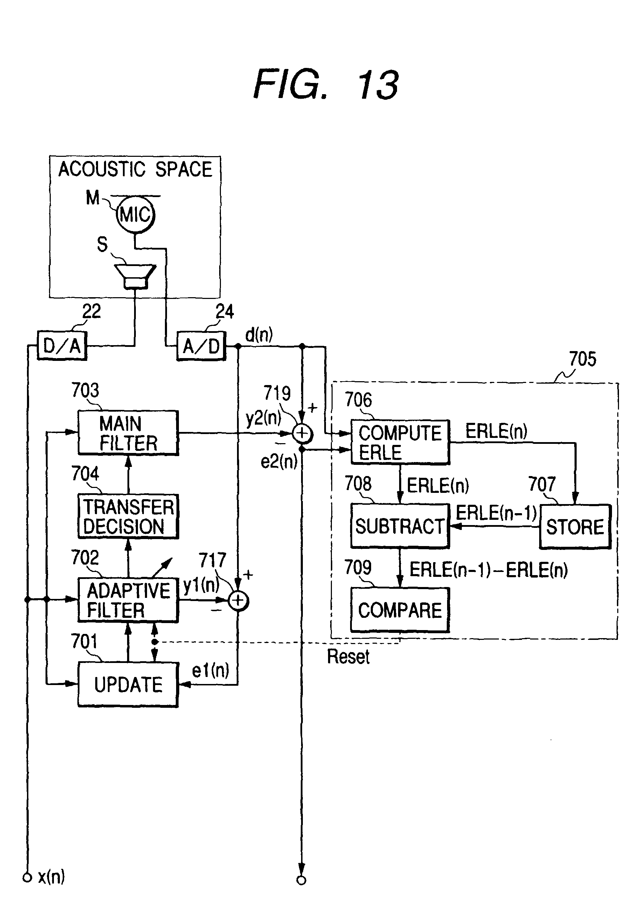

Fig. 13 shows the flow of operation of the DSP 20C rather than the details of the hardware of the DSP 20C. With reference to Fig. 13, the DSP 20C is programmed to form an updating section 701, a digital adaptive filter 702, a digital main filter 703, a deciding section 704, a control block 705, and subtracters 717 and 719.

The adaptive filter 702 forms a background filter whose operation characteristics are determined by coefficients (tap coefficients). The updating section 701 updates the coefficients in the adaptive filter 702 in response to an error signal e1(n) and the digital far-end signal x(n) according to a predetermined algorithm such as an NLMS algorithm, an FRLS algorithm, or another least-squares-method based algorithm. The updating section 701 has internal coefficients (internal tap coefficients) which are bases for generating the coefficients in the adaptive filter 702. The updating section 701 and the adaptive filter 702 cooperate to identify or estimate an echo path, and to generate a first pseudo echo signal y1 (n) in response to the far-end signal x(n) and the error signal e1(n). The subtracter 717 generates the error signal e1(n) which is the difference between a digital echo signal d(n) and the first pseudo echo signal y1(n). The digital echo signal d(n) has a sequence of samples.

The main filter 703 forms a foreground filter whose operation characteristics are determined by coefficients (tap coefficients). The main filter 703 generates a second pseudo echo signal y2(n) in response to the far-end signal x(n). The second pseudo echo signal y2(n) is designed to cancel the echo signal d(n) which would return to the far-end side. The deciding section 704 periodically decides whether or not the coefficients should be transferred from the adaptive filter 702 to the main filter 703, specifically whether or not predetermined conditions are met. The period of the decision by the deciding section 704 corresponds to one sample of the far-end signal x(n). The period of the decision by the deciding section 704 may be equal to another predetermined value. The predetermined conditions used by the deciding section 704 relate to at least one of the ratio between the error signal e1(n) and the error signal e2(n), the difference between the error signal e1(n) and the error signal e2(n), and the value of the correlation between the first pseudo echo signal y1(n) and the echo signal d(n). A typical example of the predetermined conditions is that the error signal e1(n) is smaller than the echo signal d(n) by a certain level or more, and the error signal e1(n) is smaller than the error signal e2(n). In the case where the deciding section 704 decides that the predetermined conditions are met, the deciding section 704 transfers the coefficients from the adaptive filter 702 to the main filter 703. Thus, in this case, the main filter 703 generates the second pseudo echo signal y2(n) depending on the newly-transferred coefficients. The subtracter 719 generates the error signal e2(n) which is the difference between the echo signal d(n) and the second pseudo echo signal y2(n). The error signal e2(n) is transmitted to the far-end side as an echo-free signal. On the other hand, in the case where the deciding section 704 decides that the predetermined conditions are not met, the deciding section 704 does not execute the transfer of the coefficients from the adaptive filter 702 to the main filter 703.

The control block 705 decides whether or not the internal coefficients (internal tap coefficients) in the updating section 701 and the coefficients in the adaptive filter 702 should be initialized on the basis of the echo signal d(n) and the error signal e2(n). The control block 705 includes a calculating section 706, a storing section 707, a subtracting section 708, and a comparing section 709.

In the control block 705, the calculating section 706 computes the ERLE (echo return loss enhancement) value ERLE(n) from the present and previous samples of the echo signal d(n) and the error signal e2(n) according to the following equations.

$$\text{ERLE(n)} = 10 \cdot \log_{10}(Ad/Ae) \tag{1}$$

$$Ad = \sum_{i=0}^{N} \{d(n-i)\}^2 \qquad \cdots (2)$$

$$Ae = \sum_{i=0}^{N} \{e2(n-i)\}^2 \qquad \cdots (3)$$

The computed value ERLE(n) corresponds to the present sample. The calculating section 706 informs the storing section 707 and the subtracting section 708 of the present computed value ERLE(n). The storing section 707 temporarily stores the computed value ERLE(n). The storing section 707 feeds the subtracting section 708 with the stored value as the previous computed value ERLE(n-1) which corresponds to the sample immediately preceding the present sample. The subtracting section 708 subtracts the present computed value ERLE(n) from the previous computed value ERLE(n-1). The subtracting section 708 informs the comparing section 709 of the subtraction result. The comparing section 709 compares the subtraction result with a predetermined positive threshold value "α". When the subtraction result exceeds the threshold value "α", the comparing section 709 decides that the internal coefficients in the updating section 701 and the coefficients in the adaptive filter 702 should be initialized. In this case, the comparing section 709 executes the initialization of the internal coefficients in the updating section 701 and the coefficients in the adaptive filter 702. An abrupt drop in the computed ERLE value causes the subtraction result to exceed the threshold value "α". On the other hand, when the subtraction result does not exceed the threshold value "α", the comparing section 709 decides that internal coefficients in the updating section 701 and the coefficients in the adaptive filter 702 should not be initialized. In this case, the comparing section 709 does not execute the initialization.

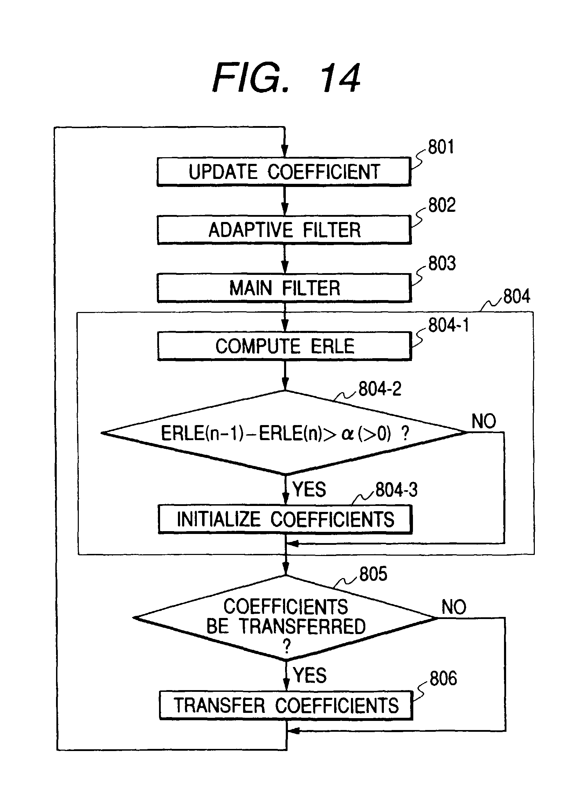

Fig. 14 is a flowchart of a segment of the control program for the DSP 20C. In general, the program segment is executed for every sample of each of the far-end signal x(n) and the echo signal d(n). As shown in Fig. 14, a first step 801 of the program segment updates the coefficients (tap coefficients) in the adaptive filter in response to the error signal e1(n) and the far-end signal x(n) according to a predetermined algorithm such as an NLMS algorithm, an FRLS algorithm, or another least-squares-method based algorithm. The step 801 uses internal coefficients (internal tap coefficients) as bases for generating the coefficients in the adaptive filter.

A step 802 following the step 801 executes an adaptive filtering process based on the coefficients updated by the step 801, and thereby generates the first pseudo echo signal y1(n) in response to the far-end signal x(n) and the error signal e1(n). In addition, the step 802 generates the error signal e1(n) which is the difference between the echo signal d(n) and the first pseudo echo signal y1(n).

A step 803 subsequent to the step 802 executes a main filtering process based on coefficients (tap coefficients), and thereby generates the second pseudo echo signal y2(n) in response to the far-end signal x(n). In addition, the step 803 generates the error signal e2(n) which is the difference between the echo signal d(n) and the second pseudo echo signal y2(n). The step 803 outputs the error signal e2(n) toward the far-end side as an echo-free signal.

A control block 804 includes steps 804-1, 804-2, and 804-3. The step 804-1 follows the step 803. The step 804-1 computes the ERLE (echo return loss enhancement) value ERLE(n) from the present and previous samples of the echo signal d(n) and the error signal e2(n) according to the previously-indicated equations (1), (2), and (3). The computed value ERLE(n) corresponds to the present sample. The step 804-1 stores the computed value ERLE(n) into the RAM within the DSP 20C.

In the control block 804, the step 804-2 follows the step 804-1. The step 804-2 reads out the previous computed value ERLE(n-1) from the RAM within the DSP 20C which has been stored during the immediately-preceding execution cycle of the program segment. The step 804-2 subtracts the present computed value ERLE(n) from the previous computed value ERLE(n-1). The step 804-2 compares the subtraction result with the threshold value "α". When the subtraction result exceeds the threshold value "α", the step 804-2 decides that the internal coefficients used by the coefficient updating step 801 and the coefficients used by the adaptive filtering step 802 should be initialized. In this case, the program advances from the step 804-2 to the step 804-3. On the other hand, when the subtraction result does not exceed the threshold value "α", the step 804-2 decides that the internal coefficients used by the coefficient updating step 801 and the coefficients used by the adaptive filtering step 802 should not be initialized. In this case, the program advances from the step 804-2 to a step 805.

In the control block 804, the step 804-3 initializes the internal coefficients used by the coefficient updating step 801 and the coefficients used by the adaptive filtering step 802. After the step 804-3, the program advances to the step 805.

The step 805 periodically decides whether or not the coefficients should be transferred from the adaptive filtering step 802 to the main filtering step 803, specifically whether or not the predetermined conditions are met. The period of the decision by the step 805 corresponds to one sample of the far-end signal x(n). The period of the decision by the step 805 may be equal to another predetermined value. The predetermined conditions used by the step 805 relate to at least one of the ratio between the error signal e1(n) and the error signal e2(n), the difference between the error signal e1(n) and the error signal e2(n), and the value of the correlation between the first pseudo echo signal y1(n) and the echo signal d(n). A typical example of the predetermined conditions is that the error signal e1(n) is smaller than the echo signal d(n) by a certain level or more, and the error signal e1(n) is smaller than the error signal e2(n). When the step 805 decides that the predetermined conditions are met, the program advances from the step 805 to a step 806. Otherwise, the program returns from the step 805 to the step 801.

The step 806 transfers the coefficients from the adaptive filtering step 802 to the main filtering step 803. Thus, in this case, the main filtering step 803 generates the second pseudo echo signal y2(n) depending on the newly-transferred coefficients during the next execution cycle of the program segment. After the step 806, the program returns to the step 801.

Fifth Embodiment

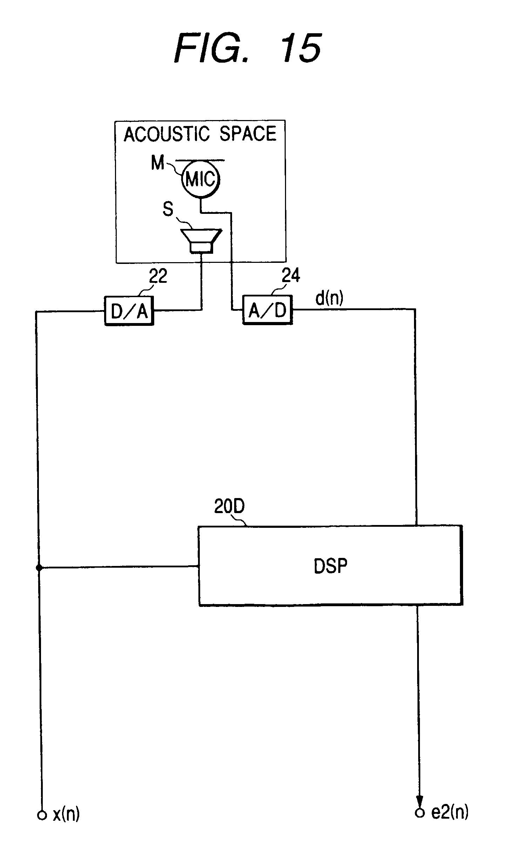

Fig. 15 shows a fifth embodiment of this invention which is similar to the first embodiment thereof except for design changes mentioned hereinafter. The fifth embodiment of this invention includes a DSP 20D instead of the DSP 20 (see Fig. 2).

The DSP 20D includes a combination of an input/output port, a processing section, a ROM, and a RAM. The DSP 20D operates in accordance with a control program stored in the ROM. According to the control program, the DSP 20D forms an echo canceler which responds to a digital far-end signal x(n) and removes echo components from the output signal of an A/D converter 24. The DSP 20D generates a digital echo-free signal as a digital error signal e2(n). The digital far-end signal x(n) has a sequence of samples. Also, the digital error signal e2(n) has a sequence of samples. Here, "n" denotes the present sample. The DSP 20D outputs the digital error signal e2(n) which is transmitted to the far-end side.

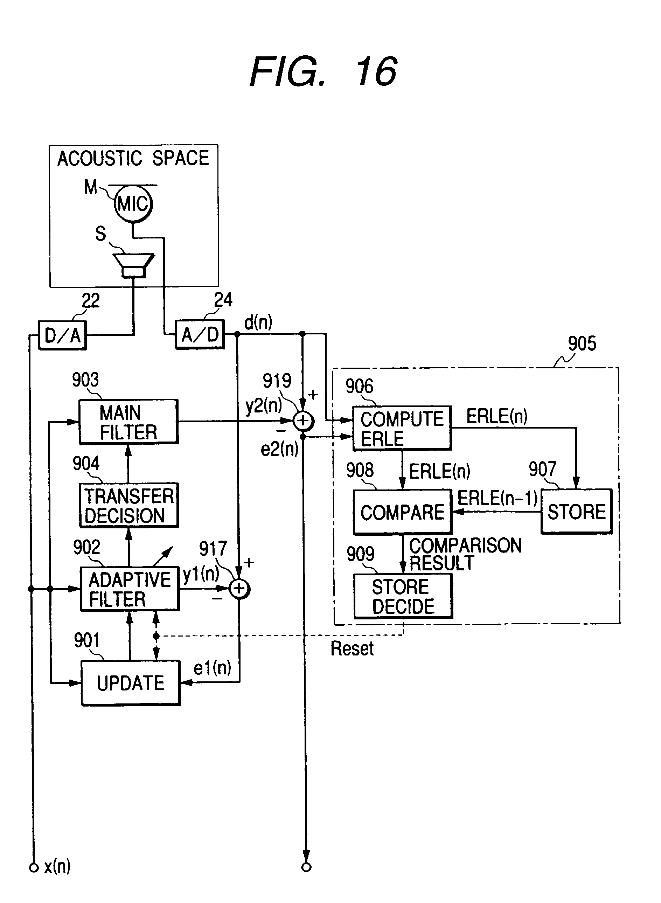

Fig. 16 shows the flow of operation of the DSP 20D rather than the details of the hardware of the DSP 20D. With reference to Fig. 16, the DSP 20D is programmed to form an updating section 901, a digital adaptive filter 902, a digital main filter 903, a deciding section 904, a control block 905, and subtracters 917 and 919.

The adaptive filter 902 forms a background filter whose operation characteristics are determined by coefficients (tap coefficients). The updating section 901 updates the coefficients in the adaptive filter 902 in response to an error signal e1(n) and the digital far-end signal x(n) according to a predetermined algorithm such as an NLMS algorithm, an FRLS algorithm, or another least-squares-method based algorithm. The updating section 901 has internal coefficients (internal tap coefficients) which are bases for generating the coefficients in the adaptive filter 902. The updating section 901 and the adaptive filter 902 cooperate to identify or estimate an echo path, and to generate a first pseudo echo signal y1 (n) in response to the far-end signal x(n) and the error signal e1(n). The subtracter 917 generates the error signal e1(n) which is the difference between a digital echo signal d(n) and the first pseudo echo signal y1(n). The digital echo signal d(n) has a sequence of samples.

The main filter 903 forms a foreground filter whose operation characteristics are determined by coefficients (tap coefficients). The main filter 903 generates a second pseudo echo signal y2(n) in response to the far-end signal x(n). The second pseudo echo signal y2(n) is designed to cancel the echo signal d(n) which would return to the far-end side. The deciding section 904 periodically decides whether or not the coefficients should be transferred from the adaptive filter 902 to the main filter 903, specifically whether or not predetermined conditions are met. The period of the decision by the deciding section 904 corresponds to one sample of the far-end signal x(n). The period of the decision by the deciding section 904 may be equal to another predetermined value. The predetermined conditions used by the deciding section 904 relate to at least one of the ratio between the error signal e1(n) and the error signal e2(n), the difference between the error signal e1(n) and the error signal e2(n), and the value of the correlation between the first pseudo echo signal y1(n) and the echo signal d(n). A typical example of the predetermined conditions is that the error signal e1(n) is smaller than the echo signal d(n) by a certain level or more, and the error signal e1(n) is smaller than the error signal e2(n). In the case where the deciding section 904 decides that the predetermined conditions are met, the deciding section 904 transfers the coefficients from the adaptive filter 902 to the main filter 903. Thus, in this case, the main filter 903 generates the second pseudo echo signal y2(n) depending on the newly-transferred coefficients. The subtracter 919 generates the error signal e2(n) which is the difference between the echo signal d(n) and the second pseudo echo signal y2(n). The error signal e2(n) is transmitted to the far-end side as an echo-free signal. On the other hand, in the case where the deciding section 904 decides that the predetermined conditions are not met, the deciding section 904 does not execute the transfer of the coefficients from the adaptive filter 902 to the main filter 903.

The control block 905 decides whether or not the internal coefficients (internal tap coefficients) in the updating section 901 and the coefficients in the adaptive filter 902 should be initialized on the basis of the echo signal d(n) and the error signal e2(n). The control block 905 includes a calculating section 906, a storing section 907, a comparing section 908, and a storing/deciding section 909.

In the control block 905, the calculating section 906 computes the ERLE (echo return loss enhancement) value ERLE(n) from the present and previous samples of the echo signal d(n) and the error signal e2(n) according to the previously-indicated equations (1), (2), and (3). The computed value ERLE(n) corresponds to the present sample. The calculating section 906 informs the storing section 907 and the comparing section 908 of the present computed value ERLE(n). The storing section 907 temporarily stores the computed value ERLE(n). The storing section 907 feeds the comparing section 908 with the stored value as the previous computed value ERLE(n-1) which corresponds to the sample immediately preceding the present sample. The comparing section 908 compares the present computed value ERLE(n) and the previous computed value ERLE(n-1). Specifically, the comparing section 908 decides whether or not the present computed value ERLE(n) is smaller than the previous computed value ERLE(n-1), that is, whether or not ERLE(n) < ERLE(n-1). The comparing section 908 informs the storing/deciding section 909 of the decision result (the comparison result). The comparison results for a predetermined number "m" of successive samples starting from the present sample are stored in the storing/deciding section 909. The storing/deciding section 909 decides whether or not all the stored comparison results (all the stored decision results) are positive, that is, whether or not the following relation (4) is satisfied.

$$ERLE(n) < ERLE(n-1) < ERLE(n-2) < \cdots < ERLE(n-m+1) \tag{4}$$

The relation (4) means that the computed ERLE value continues to drop for the predetermined number "m" of successive samples. When the relation (4) is satisfied, the storing/deciding section 909 decides that the internal coefficients in the updating section 901 and the coefficients in the adaptive filter 902 should be initialized. In this case, the storing/deciding section 909 executes the initialization of the internal coefficients in the updating section 901 and the coefficients in the adaptive filter 902. On the other hand, when the relation (4) is not satisfied, the storing/deciding section 909 decides that the internal coefficients in the updating section 901 and the coefficients in the adaptive filter 902 should not be initialized. In this case, the storing/deciding section 909 does not execute the initialization.

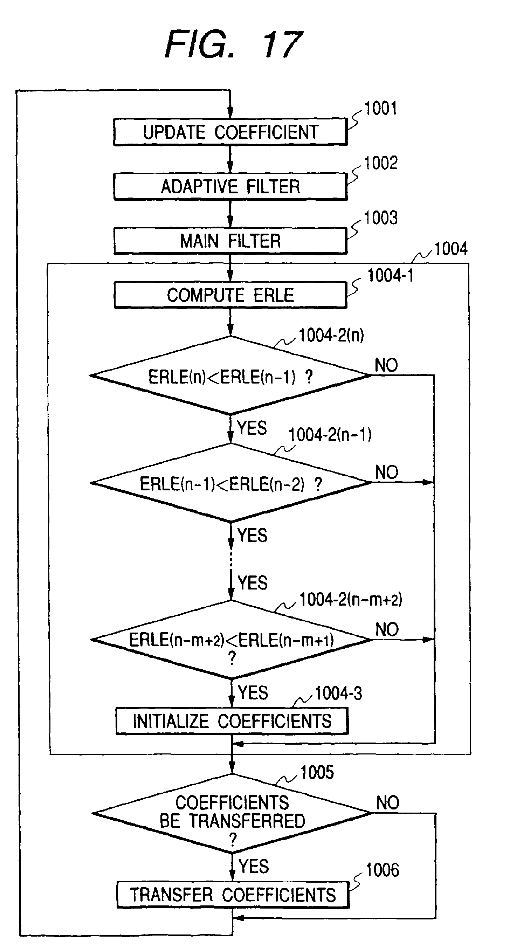

Fig. 17 is a flowchart of a segment of the control program for the DSP 20D. In general, the program segment is executed for every sample of each of the far-end signal x(n) and the echo signal d(n). As shown in Fig. 17, a first step 1001 of the program segment updates the coefficients (tap coefficients) in the adaptive filter in response to the error signal e1(n) and the far-end signal x(n) according to a predetermined algorithm such as an NLMS algorithm, an FRLS algorithm, or another least-squares-method based algorithm. The step 1001 uses internal coefficients (internal tap coefficients) as bases for generating the coefficients in the adaptive filter.

A step 1002 following the step 1001 executes an adaptive filtering process based on the coefficients updated by the step 1001, and thereby generates the first pseudo echo signal y1(n) in response to the far-end signal x(n) and the error signal e1(n). In addition, the step 1002 generates the error signal e1(n) which is the difference between the echo signal d(n) and the first pseudo echo signal y1(n).

A step 1003 subsequent to the step 1002 executes a main filtering process based on coefficients (tap coefficients), and thereby generates the second pseudo echo signal y2(n) in response to the far-end signal x(n). In addition, the step 1003 generates the error signal e2(n) which is the difference between the echo signal d(n) and the second pseudo echo signal y2(n). The step 1003 outputs the error signal e2(n) toward the far-end side as an echo-free signal.

A control block 1004 includes steps 1004-1, 1004-2(n), 1004 - 2(n-1), $\cdots$, 1004-2(n-m+2), and 1004-3. The step 1004-1 follows the step 1003. The step 1004-1 computes the ERLE (echo return loss enhancement) value ERLE(n) from the present and previous samples of the echo signal d(n) and the error signal e2(n) according to the previously-indicated equations (1), (2), and (3). The computed value ERLE(n) corresponds to the present sample. The step 1004-1 stores the computed value ERLE(n) into the RAM within the DSP 20D.

In the control block 1004, the step 1004-2(n) follows the step 1004-1. The step 1004-2(n) reads out the present computed value ERLE(n) and the previous computed value ERLE(n-1) from the RAM within the DSP 20D. The step 1004-2(n) decides whether or not the present computed value ERLE(n) is smaller than the previous computed value ERLE(n-1), that is, whether or not ERLE(n) < ERLE(n-1). When ERLE(n) < ERLE(n-l), the program advances from the step 1004-2(n) to the step 1004-2(n-1). Otherwise, the program advances from the step 1004-2(n) to a step 1005.

In the control block 1004, the step 1004-2(n) is successively followed by the steps 1004-2(n-1), $\cdots$, 1004-2(n-m+2). The steps 1004-2(n-1), $\cdots$, 1004-2(n-m+2) are basically similar in function to the step 1004-2(n). For example, the step 1004-2(n-1) decides whether or not ERLE(n-1) < ERLE(n-2). When ERLE(n-1) < ERLE(n-2), the program advances from the step 1004-2(n-1) to the step 1004-2(n-2). Otherwise, the program advances from the step 1004-2(n-1) to the step 1005. For example, the step 1004-2(n-m+2) decides whether or not ERLE(n-m+2) < ERLE(n-m+1). When ERLE(n-m+2) < ERLE(n-m+1), the program advances from the step 1004-2(n-m+2) to the step 1004-3. Otherwise, the program advances from the step 1004-2(n-m+2) to the step 1005.

In the control block 1004, the step 1004-3 decides that the internal coefficients used by the coefficient updating step 1001 and the coefficients used by the adaptive filtering step 1002 should be initialized. The step 1004-3 executes the initialization of the internal coefficients used by the coefficient updating step 1001 and the coefficients used by the adaptive filtering step 1002. After the step 1004-3, the program advances to the step 1005.

The step 1005 periodically decides whether or not the coefficients should be transferred from the adaptive filtering step 1002 to the main filtering step 1003, specifically whether or not the predetermined conditions are met. The period of the decision by the step 1005 corresponds to one sample of the far-end signal x(n). The period of the decision by the step 1005 may be equal to another predetermined value. The predetermined conditions used by the step 1005 relate to at least one of the ratio between the error signal e1(n) and the error signal e2(n), the difference between the error signal e1(n) and the error signal e2(n), and the value of the correlation between the first pseudo echo signal y1(n) and the echo signal d(n). A typical example of the predetermined conditions is that the error signal e1(n) is smaller than the echo signal d(n) by a certain level or more, and the error signal e1(n) is smaller than the error signal e2(n). When the step 1005 decides that the predetermined conditions are met, the program advances from the step 1005 to a step 1006. Otherwise, the program returns from the step 1005 to the step 1001.

The step 1006 transfers the coefficients from the adaptive filtering step 102 to the main filtering step 1003. Thus, in this case, the main filtering step 1003 generates the second pseudo echo signal y2(n) depending on the newly-transferred coefficients during the next execution cycle of the program segment. After the step 1006, the program returns to the step 1001.

**Claims**

1. A method of canceling an echo, comprising the steps of:

updating coefficients of an adaptive filter in response to a far-end signal and an error signal by using internal coefficients, the adaptive filter and the internal coefficients having a tap length;
providing the adaptive filter for generating a first pseudo echo signal in response to the far-end signal;
providing a main filter for generating a second pseudo echo signal in response to the far-end signal;
deciding whether or not the coefficients of the adaptive filter and the internal coefficients in the updating step should be initialized;
in cases where it is decided that the coefficients of the adaptive filter and the internal coefficients in the updating step should be initialized, setting the tap length of the adaptive filter and the updating step to a non-original value smaller than an original value, and then executing initialization of the coefficients of the adaptive filter and the internal coefficients in the updating step;
deciding whether or not the coefficients of the adaptive filter should be transferred to the main filter;
in cases where it is decided that the coefficients of the adaptive filter should be transferred to the main filter, executing transfer of the coefficients of the adaptive filter to the main filter; and
in cases where transfer of the coefficients of the adaptive filter to the main filter is executed after the tap length of the adaptive filter and the updating step is set to the non-original value, setting the tap length of the adaptive filter and the updating step to the original value, and then executing initialization of the coefficients of the adaptive filter and the internal coefficients in the updating step.

2. A method as recited in claim 1, further comprising the steps of:

dividing the far-end signal into sub-band signals;
dividing an echo signal into sub-band signals;
generating second sub-band pseudo echo signals in response to the sub-band signals of the far-end signal for sub-bands respectively;
generating sub-band error signals corresponding to differences between the sub-band signals of the echo signal and the second sub-band pseudo echo signals, respectively; and
combining the sub-band error signals into a full-band error signal;
wherein echo cancel is implemented for each of the sub-bands.

3. A method as recited in claim 1 or 2,
further comprising the step of in cases where transfer of the coefficients of the adaptive filter to the main filter remains unexecuted for a predetermined time after the tap length of the adaptive filter and the updating step is set to the non-original value, returning the tap length of the adaptive filter and the updating step to the original value.

4. A method as recited in claim 1, 2 or 3, wherein the step of executing initialization comprises:

calculating an ERLE (echo return loss enhancement) ratio in power between an echo signal and the second pseudo error signal for every sample;
calculating a difference between the ERLE ratio for a current sample and the ERLE ratio for an immediately-preceding sample; and
in cases where the calculated difference exceeds a predetermined threshold value, initializing the coefficients of the adaptive filter and the internal coefficients in the updating step.

5. A method as recited in claim 1, 2 or 3, wherein the step of executing initialization comprises:

calculating an ERLE (echo return loss enhancement) ratio in power between an echo signal and the second pseudo error signal for every sample; and
in cases where the calculated ERLE ratio continues to drop for a plurality of successive samples, initializing the coefficients of the adaptive filter and the internal coefficients in the updating step.

6. A method as recited in any one of the preceding claims, wherein the updating step uses a coefficient updating algorithm of a least-squares-method type.

7. A method of initializing coefficients in an echo canceler, the method comprising the steps of:

calculating an ERLE (echo return loss enhancement) ratio in power between an echo signal and an error signal generated by a main filter for every sample;
calculating a difference between the ERLE ratio for a current sample and the ERLE ratio for an immediately-preceding sample; and
in cases where the calculated difference exceeds a predetermined threshold value, initializing coefficients of an adaptive filter and internal coefficients used in updating the coefficients of the adaptive filter.

8. A method of initializing coefficients in an echo canceler, the method comprising the steps of:

calculating an ERLE (echo return loss enhancement) ratio in power between an echo signal and an error signal generated by a main filter for every sample; and
in cases where the calculated ERLE ratio continues to drop for a plurality of successive samples, initializing coefficients of an adaptive filter and internal coefficients used in updating the coefficients of the adaptive filter.

9. An apparatus for canceling an echo, comprising:

means for updating coefficients of an adaptive filter in response to a far-end signal and an error signal by using internal coefficients, the adaptive filter and the internal coefficients having a tap length;
means for providing the adaptive filter which generates a first pseudo echo signal in response to the far-end signal;
means for providing a main filter which generates a second pseudo echo signal in response to the far-end signal;
means for deciding whether or not the coefficients of the adaptive filter and the internal coefficients in the updating means should be initialized;
means for in cases where it is decided that the coefficients of the adaptive filter and the internal coefficients in the updating means should be initialized, setting the tap length of the adaptive filter and the updating means to a non-original value smaller than an original value, and then executing initialization of the coefficients of the adaptive filter and the internal coefficients in the updating means;
means for deciding whether or not the coefficients of the adaptive filter should be transferred to the main filter;
means for in cases where it is decided that the coefficients of the adaptive filter should be transferred to the main filter, executing transfer of the coefficients of the adaptive filter to the main filter; and
means for in cases where transfer of the coefficients of the adaptive filter to the main filter is executed after the tap length of the adaptive filter and the updating means is set to the non-original value, setting the tap length of the adaptive filter and the updating means to the original value, and then executing initialization of the coefficients of the adaptive filter and the internal coefficients in the updating means.

10. An apparatus as recited in claim 9, further comprising:

means for dividing the far-end signal into sub-band signals;
means for dividing an echo signal into sub-band signals;
means for generating second sub-band pseudo echo signals in response to the sub-band signals of the far-end signal for sub-bands respectively;
means for generating sub-band error signals corresponding to differences between the sub-band signals of the echo signal and the second sub-band pseudo echo signals, respectively; and
means for combining the sub-band error signals into a full-band error signal;
wherein echo cancel is implemented for each of the sub-bands.

11. An apparatus as recited in claim 9 or 10, further comprising means
for in cases where transfer of the coefficients of the adaptive filter to the main filter remains unexecuted for a predetermined time after the tap length of the adaptive filter and the updating means is set to the non-original value, returning the tap length of the adaptive filter and the updating means to the original value.

12. An apparatus as recited in claim 9, 10 or 11, wherein the means for executing initialization comprises:

means for calculating an ERLE (echo return loss enhancement) ratio in power between an echo signal and the second pseudo error signal for every example; second pseudo error signal for every sample;

means for calculating a difference between the ERLE ratio for a current sample and the ERLE ratio for an immediately-preceding sample; and

means for in cases where the calculated difference exceeds a predetermined threshold value, initializing the coefficients of the adaptive filter and the internal coefficients in the updating means.

13. An apparatus as recited in claim 9, 10 or 11, wherein the means for executing initialization comprises:

means for calculating an ERLE (echo return loss enhancement) ratio in power between an echo signal and the second pseudo error signal for every sample; and

means for in cases where the calculated ERLE ratio continues to drop for a plurality of successive samples, initializing the coefficients of the adaptive filter and the internal coefficients in the updating means.

14. An apparatus as recited in any one of claims 9 to 13, wherein the updating means uses a coefficient updating algorithm of a least-squares-method type.

15. A device for initializing coefficients in an echo canceler, the device comprising:

means for calculating an ERLE (echo return loss enhancement) ratio in power between an echo signal and an error signal generated by a main filter for every sample;

means for calculating a difference between the ERLE ratio for a current sample and the ERLE ratio for an immediately-preceding sample; and

means for in cases where the calculated difference exceeds a predetermined threshold value, initializing coefficients of an adaptive filter and internal coefficients used in updating the coefficients of the adaptive filter.

16. In an echo canceler, a device for initializing coefficients, comprising:

means for calculating an ERLE (echo return loss enhancement) ratio in power between an echo signal and an error signal generated by a main filter for every sample; and

means for in cases where the calculated ERLE ratio continues to drop for a plurality of successive samples, initializing coefficients of an adaptive filter and internal coefficients used in updating the coefficients of the adaptive filter.

17. A computer program comprising computer program code means adapted to perform the steps of the method of any one of claims 1 to 8, when said program is run on a computer.

# FIG. 1 PRIOR ART

# FIG. 2

# FIG. 3

# FIG. 4

UPDATE COEFFICIENTS — 201

ADAPTIVE FILTER — 202

MAIN FILTER — 203

204

204-1
COEFFICIENTS BE INITIALIZED ? — NO

YES — 204-2
TAP LENGTH=M1

204-3
INITIALIZE COEFFICIENTS

205
COEFFICIENTS BE TRANSFERRED ? — NO

YES
TRANSFER COEFFICIENTS — 206

207

207-1
TAP LENGTH=M1 ? — NO

YES — 207-2
TAP LENGTH=M0

207-3
INITIALIZE COEFFICIENTS

# FIG. 5

EP 1 093 284 A2

FIG. 6

26

# FIG. 7

**410** — STEPS FOR FAR-END SIGNAL
- **411** — DIVIDE BAND
- **412** — THIN

**420** — STEPS FOR MIC INPUT
- **421** — DIVIDE BAND
- **422** — THIN

**430** — SUB-BAND ECHO CANCEL

**440** — STEPS FOR ERROR SIGNAL
- **441** — INTERPOLATE
- **442** — COMBINE SUB-BANDS

# FIG. 8

430

```
         ┌──────────────────────┐
         │   UPDATE COEFFICIENT   │  431
         └──────────────────────┘
                   │
         ┌──────────────────────┐
         │    ADAPTIVE FILTER     │  432
         └──────────────────────┘
                   │
         ┌──────────────────────┐
         │      MAIN FILTER       │  433
         └──────────────────────┘
```

434

434-1

COEFFICIENTS BE INITIALIZED ?          NO

YES          434-2

TAP LENGTH=M1

434-3

INITIALIZE COEFFICIENTS

435

COEFFICIENTS BE TRANSFERRED ?          NO

YES

TRANSFER COEFFICIENTS          436

437

437-1

TAP LENGTH=M1 ?          NO

YES          437-2

TAP LENGTH=M0

437-3

INITIALIZE COEFFICIENTS

# FIG. 9

# FIG. 10

## FIG. 11

# FIG. 12

EP 1 093 284 A2

# FIG. 13

# FIG. 14

UPDATE COEFFICIENT — 801

ADAPTIVE FILTER — 802

MAIN FILTER — 803

804

COMPUTE ERLE — 804-1

804-2

$ERLE(n-1) - ERLE(n) > \alpha\,(>0)$ ? — NO

YES — 804-3

INITIALIZE COEFFICIENTS

805

COEFFICIENTS BE TRANSFERRED ? — NO

YES — 806

TRANSFER COEFFICIENTS

# FIG. 15

# FIG. 16

# FIG. 17

```
┌─────────────────────────┐
│   UPDATE COEFFICIENT     │─ 1001
└─────────────────────────┘
            ↓
┌─────────────────────────┐
│     ADAPTIVE FILTER      │─ 1002
└─────────────────────────┘
            ↓
┌─────────────────────────┐
│       MAIN FILTER        │─ 1003
└─────────────────────────┘
            ↓                          ─ 1004
┌─────────────────────────┐
│      COMPUTE ERLE        │─ 1004-1
└─────────────────────────┘
            ↓                ─ 1004-2(n)
    ◇ ERLE(n)<ERLE(n-1) ? ◇ ──NO──┐
            ↓ YES                   │
                    ─ 1004-2(n-1)   │
    ◇ ERLE(n-1)<ERLE(n-2) ? ◇ ─NO─→│
            ↓ YES                   │
            ⋮                        │
            ↓ YES                   │
                  ─ 1004-2(n-m+2)   │
    ◇ ERLE(n-m+2)<ERLE(n-m+1) ? ◇ ─NO─→│
            ↓ YES    ─ 1004-3       │
┌─────────────────────────┐         │
│  INITIALIZE COEFFICIENTS │         │
└─────────────────────────┘         │
            ↓←──────────────────────┘
                   ─ 1005
    ◇ COEFFICIENTS BE TRANSFERRED ? ◇ ──NO──┐
            ↓ YES     ─ 1006               │
┌─────────────────────────┐                 │
│   TRANSFER COEFFICIENTS  │                 │
└─────────────────────────┘←────────────────┘
```